# EUROPEAN PATENT APPLICATION

(11) **EP 4 699 836 A1**
(43) Date of publication of application: **25.02.2026**
(21) Application number: 24791988.9
(22) Date of filing: 16.04.2024
(51) Int. Cl.: B60J 3/04, G02F 1/1514

(54) **DIMMING GLASS SYSTEM FOR VEHICLE, AND CONTROL METHOD FOR SAME**

(30) Priority: 21.04.2023 CN 202310436591
(71) Applicant: Boe Technology Group Co., Ltd., Beijing 100015 (CN); Beijing BOE Technology Development Co., Ltd., Beijing 100176 (CN)
(72) Inventor: CHU, Xiao, Beijing 100176 (CN); ZHAO, Junjie, Beijing 100176 (CN); JU, Xiaoqian, Beijing 100176 (CN); TANG, Yutao, Beijing 100176 (CN); YU, Jing, Beijing 100176 (CN); ZHANG, Yangyang, Beijing 100176 (CN); MA, Mingyuan, Beijing 100176 (CN); ZHANG, Honglei, Beijing 100176 (CN); SU, Jing, Beijing 100176 (CN); CHEN, Shaobei, Beijing 100176 (CN)
(74) Representative: AWA Sweden AB
(86) International application number: PCT/CN2024/087999
(87) International publication number: WO 2024/217403

(57) **Abstract**

A switchable glass system for a vehicle and a method of controlling a switchable glass system are provided. The switchable glass system includes a switchable glass (10) installed on the vehicle. The method includes: acquiring a light intensity change information, where the light intensity change information includes at least one of a light intensity value change or a light intensity change rate; and adjusting a light transmittance of the switchable glass (10) based on a transmittance adjustment information in response to the light intensity change information meeting a predetermined condition. The transmittance adjustment information includes adjusting at least one of a magnitude of the light transmittance of the switchable glass (10) or a change rate of the light transmittance of the switchable glass (10).

## Description

### TECHNICAL FIELD

The present disclosure relates to a field of controllable dimming technology, and in particular to a switchable glass system for a vehicle and a method of controlling a switchable glass system.

### BACKGROUND

Switchable glass, also known as atomized glass, electric-controlled glass or intelligent dimming and color-changing glass, may change its light transmittance by regulating an input electrical signal. With a development of technology, the switchable glass has begun to be applied in fields such as automobiles, trains and building curtain walls.

The switchable glass may change the light transmittance, that is, change transparency, in response to an environmental change. How to adaptively adjust the transparency of the switchable glass according to environmental changes or user desires is a topic that research and development personnel continuously focus on.

The above information disclosed in this section is merely for the understanding of the background of technical concepts of the present disclosure. Therefore, the above information may contain information that does not constitute a related art.

### SUMMARY

In an aspect, a method of controlling a switchable glass system for a vehicle is provided, the switchable glass system includes a switchable glass installed on the vehicle, the method includes: acquiring a light intensity change information, the light intensity change information comprising at least one of a light intensity value change or a light intensity change rate; and adjusting a light transmittance of the switchable glass based on a transmittance adjustment information in response to the light intensity change information meeting a predetermined condition, wherein the transmittance adjustment information comprises adjusting at least one of a magnitude of the light transmittance of the switchable glass or a change rate of the light transmittance of the switchable glass.

According to some exemplary embodiments, the method further includes: determining the transmittance adjustment information according to a predetermined first mapping relationship between the light intensity change information and a light transmittance adjustment information, in response to the light intensity change information meeting the predetermined condition, wherein the determined transmittance adjustment information corresponds to the light intensity change information meeting the predetermined condition in the first mapping relationship.

According to some exemplary embodiments, the adjusting a light transmittance of the switchable glass comprises: adjusting the light transmittance of the switchable glass by regulating an electrical signal applied to the switchable glass, wherein the electrical signal is regulated based on an electrical signal regulation information.

According to some exemplary embodiments, the electrical signal regulation information comprises regulating at least one of an amplitude of the electrical signal applied to the switchable glass or a switching rate of the electrical signal applied to the switchable glass.

According to some exemplary embodiments, the method further includes: determining the electrical signal regulation information according to a predetermined second mapping relationship between the light intensity change information and the electrical signal regulation information, in response to the light intensity change information meeting the predetermined condition, wherein the determined electrical signal regulation information corresponds to the light intensity change information meeting the predetermined condition in the second mapping relationship.

According to some exemplary embodiments, the light intensity change information meeting the predetermined condition comprises: an absolute value of a difference between an actual light intensity value detected and a predetermined light intensity value being greater than a first predetermined light intensity difference threshold.

According to some exemplary embodiments, the light intensity change information meeting the predetermined condition comprises: an absolute value of a difference between actual light intensity values detected at two time instants being greater than a second predetermined light intensity difference threshold.

According to some exemplary embodiments, the light intensity change information meeting the predetermined condition comprises: the light intensity change rate being greater than a predetermined light intensity change rate threshold.

According to some exemplary embodiments, the adjusting a light transmittance of the switchable glass based on a transmittance adjustment information in response to the light intensity change information meeting a predetermined condition specifically comprises: reducing the light transmittance of the switchable glass in response to a light intensity rise information meeting the predetermined condition.

According to some exemplary embodiments, the adjusting a light transmittance of the switchable glass based on a transmittance adjustment information in response to the light intensity change information meeting a predetermined condition specifically comprises: increasing the light transmittance of the switchable glass in response to a light intensity drop information meeting the predetermined condition.

According to some exemplary embodiments, the adjusting a light transmittance of the switchable glass based on a transmittance adjustment information in response to the light intensity change information meeting a predetermined condition specifically comprises: increasing the light transmittance of the switchable glass in response to a light intensity rise information meeting a predetermined condition.

According to some exemplary embodiments, the light intensity change rate is greater than a predetermined light intensity change rate threshold in a continuous time period, the continuous time period comprises a start time instant and an end time instant, a maximum light intensity change rate time instant is between the start time instant and the end time instant, and a light intensity change rate at the maximum light intensity change rate time instant is a maximum light intensity change rate in the continuous time period; and wherein a start regulation time instant of regulating the electrical signal applied to the switchable glass is one of the start time instant, the maximum light intensity change rate time instant, or the end time instant.

According to some exemplary embodiments, the regulating an electrical signal applied to the switchable glass comprises: regulating the electrical signal applied to the switchable glass at a fixed switching rate.

According to some exemplary embodiments, the regulating an electrical signal applied to the switchable glass comprises: regulating the electrical signal applied to the switchable glass at a first fixed switching rate in response to a light intensity rise information meeting the predetermined condition; and regulating the electrical signal applied to the switchable glass at a second fixed switching rate in response to a light intensity drop information meeting the predetermined condition.

According to some exemplary embodiments, the second fixed switching rate is less than the first fixed switching rate.

According to some exemplary embodiments, the regulating an electrical signal applied to the switchable glass comprises: regulating the electrical signal applied to the switchable glass at a variable switching rate.

According to some exemplary embodiments, acquiring the light intensity change information comprises acquiring the light intensity change rate; wherein the determining the electrical signal regulation information according to a predetermined second mapping relationship between the light intensity change information and the electrical signal regulation information comprises determining a switching rate of the electrical signal according to the predetermined second mapping relationship between the light intensity change information and the electrical signal regulation information, and the determined switching rate of the electrical signal corresponds to the light intensity change rate in the second mapping relationship; and wherein the regulating an electrical signal applied to the switchable glass comprises regulating the electrical signal applied to the switchable glass based on the determined switching rate of the electrical signal.

According to some exemplary embodiments, acquiring the light intensity change information comprises: acquiring the light intensity change information in a process of the vehicle passing through an entrance of an enclosed space.

According to some exemplary embodiments, the light intensity change information meeting the predetermined condition comprises: an actual light intensity value detected outside the enclosed space being greater than a first predetermined light intensity threshold; and/or an actual light intensity value detected inside the enclosed space being less than a second predetermined light intensity threshold.

According to some exemplary embodiments, acquiring the light intensity change information comprises: acquiring the light intensity change information in a process of the vehicle passing through an exit of the enclosed space.

According to some exemplary embodiments, the light intensity change information meeting the predetermined condition comprises: an actual light intensity value detected inside the enclosed space being less than a third predetermined light intensity threshold; and/or an actual light intensity value detected outside the enclosed space being greater than a fourth predetermined light intensity threshold.

According to some exemplary embodiments, the method further includes: acquiring a position information of the vehicle; and pre-regulating an electrical signal applied to the switchable glass according to the acquired position information, so as to pre-adjust the light transmittance of the switchable glass.

According to some exemplary embodiments, the pre-regulating an electrical signal applied to the switchable glass according to the acquired position information specifically comprises: pre-regulating the electrical signal applied to the switchable glass at a fixed switching rate in a process of the vehicle passing through an entrance or an exit of an enclosed space.

According to some exemplary embodiments, the pre-regulating an electrical signal applied to the switchable glass according to the acquired position information specifically comprises: pre-regulating the electrical signal applied to the switchable glass at a variable switching rate in a process of the vehicle passing through an entrance or an exit of an enclosed space, wherein the variable switching rate is determined based on a speed of the vehicle.

According to some exemplary embodiments, regulating the electrical signal applied to the switchable glass comprises: regulating a switching rate of the electrical signal applied to the switchable glass according to the acquired position information.

According to some exemplary embodiments, the regulating a switching rate of the electrical signal applied to the switchable glass according to the acquired position information specifically comprises: regulating the switching rate of the electrical signal to a first switching rate in a process of the vehicle passing through an entrance of an enclosed space, wherein the first switching rate is greater than a predetermined switching rate.

According to some exemplary embodiments, the regulating a switching rate of the electrical signal applied to the switchable glass according to the acquired position information specifically comprises: regulating the switching rate of the electrical signal to a second switching rate in a process of the vehicle passing through an exit of an enclosed space, wherein the second switching rate is less than a predetermined switching rate.

According to some exemplary embodiments, the regulating a switching rate of the electrical signal applied to the switchable glass according to the acquired position information specifically comprises: regulating the switching rate of the electrical signal to a third switching rate in a process of the vehicle being located in a first environment and a user of the vehicle leaving the vehicle, wherein the third switching rate is less than a predetermined switching rate, and the first environment is an environment familiar to the user of the vehicle; and/or regulating the switching rate of the electrical signal to a fourth switching rate in a process of the vehicle being located in a second environment and a user of the vehicle leaving the vehicle, wherein the fourth switching rate is greater than a predetermined switching rate, and the second environment is an environment unfamiliar to the user of the vehicle.

According to some exemplary embodiments, regulating the electrical signal applied to the switchable glass comprises: regulating the switching rate of the electrical signal applied to the switchable glass according to a speed of the vehicle in a travelling process of the vehicle, wherein the switching rate of the electrical signal is inversely proportional to the speed of the vehicle.

According to some exemplary embodiments, regulating the electrical signal applied to the switchable glass comprises: regulating, for different regions of a same switchable glass, switching rates of electrical signals respectively applied to different regions of the same switchable glass by region.

According to some exemplary embodiments, the switchable glass comprises a side windshield glass on a driver side of the vehicle, and the regulating, for different regions of a same switchable glass, switching rates of electrical signals respectively applied to different regions of the same switchable glass by region specifically comprises: regulating, for the side windshield glass, the switching rates of the electrical signals respectively applied to different regions of the side windshield glass by region, so that the switching rate for a partial region on a front side of the side windshield glass is less than the switching rate for a partial region on a rear side of the side windshield glass.

According to some exemplary embodiments, the switchable glass comprises a sunroof glass on a top side of the vehicle, and the regulating, for different regions of a same switchable glass, switching rates of electrical signals respectively applied to different regions of the same switchable glass by region specifically comprises: regulating, for the sunroof glass, the switching rates of the electrical signals respectively applied to different regions of the sunroof glass by region, so that the switching rate for a partial region of the sunroof glass is different from the switching rate for another partial region of the sunroof glass.

According to some exemplary embodiments, the switchable glass comprises a front windshield glass, a rear windshield glass, the sunroof glass, a sun visor and all side windshield glasses of the vehicle, and the adjusting the light transmittance of the switchable glass by regulating an electrical signal applied to the switchable glass specifically comprises: regulating the electrical signal applied to at least one selected from a group consisiting of the front windshield glass, the rear windshield glass, the sunroof glass, the sun visor and all the side windshield glasses of the vehicle, so as to adjust the light transmittance of the at least one selected from the group consisiting of the front windshield glass, the rear windshield glass, the sunroof glass, the sun visor and all the side windshield glasses of the vehicle.

In another aspect, a method of controlling a switchable glass system for a vehicle is provided, the switchable glass system includes a switchable glass installed on the vehicle, the method includes: acquiring at least one of a light intensity change information or a vehicle position change information, wherein the light intensity change information comprises at least one of a light intensity value change or a light intensity change rate; performing a first adjustment on a light transmittance of the switchable glass in response to the light intensity change information meeting a first predetermined condition and/or the vehicle position change information meeting a first position condition, wherein the first adjustment comprises adjusting the light transmittance of the switchable glass based on a first transmittance adjustment information; and performing a second adjustment on the light transmittance information of the switchable glass in response to the light intensity change information meeting a second predetermined condition, after performing the first adjustment on the light transmittance information of the switchable glass, wherein the second adjustment comprises adjusting the light transmittance of the switchable glass based on a second transmittance adjustment information, wherein each of the first transmittance adjustment information and the second transmittance adjustment information comprises adjusting at least one of a magnitude of the light transmittance of the switchable glass or a change rate of the light transmittance of the switchable glass.

According to some exemplary embodiments, the method further includes: after performing the second adjustment on the light transmittance information of the switchable glass, performing a third adjustment on the light transmittance information of the switchable glass in response to the light intensity change information meeting a third predetermined condition and/or the vehicle position change information meeting a second position condition, wherein the third adjustment comprises adjusting the light transmittance of the switchable glass based on a third transmittance adjustment information, wherein the third transmittance adjustment information comprises adjusting at least one of the magnitude of the light transmittance of the switchable glass or the change rate of the light transmittance of the switchable glass.

According to some exemplary embodiments, the method further includes: after performing the third adjustment on the light transmittance information of the switchable glass, performing a fourth adjustment on the light transmittance information of the switchable glass in response to the light intensity change information meeting a fourth predetermined condition, wherein the fourth adjustment comprises adjusting the light transmittance of the switchable glass based on a fourth transmittance adjustment information, wherein the fourth transmittance adjustment information comprises adjusting at least one of the magnitude of the light transmittance of the switchable glass or the change rate of the light transmittance of the switchable glass.

According to some exemplary embodiments, the method further includes determining the first transmittance adjustment information according to a predetermined first mapping relationship between the light intensity change information and a light transmittance adjustment information in response to the light intensity change information meeting the first predetermined condition, wherein the first transmittance adjustment information corresponds to the light intensity change information meeting the first predetermined condition in the first mapping relationship; and/or determining the second transmittance adjustment information according to the predetermined first mapping relationship between the light intensity change information and the light transmittance adjustment information in response to the light intensity change information meeting the second predetermined condition, wherein the second transmittance adjustment information corresponds to the light intensity change information meeting the second predetermined condition in the first mapping relationship; and/or determining the third transmittance adjustment information according to the predetermined first mapping relationship between the light intensity change information and the light transmittance adjustment information in response to the light intensity change information meeting the third predetermined condition, wherein the third transmittance adjustment information corresponds to the light intensity change information meeting the third predetermined condition in the first mapping relationship; and/or determining the fourth transmittance adjustment information according to the predetermined first mapping relationship between the light intensity change information and the light transmittance adjustment information in response to the light intensity change information meeting the fourth predetermined condition, wherein the fourth transmittance adjustment information corresponds to the light intensity change information meeting the fourth predetermined condition in the first mapping relationship.

According to some exemplary embodiments, the performing a first adjustment on a light transmittance of the switchable glass comprises: performing the first adjustment on the light transmittance of the switchable glass by performing a first regulation on an electrical signal applied to the switchable glass, wherein the first regulation comprises regulating the electrical signal based on a first electrical signal regulation information; and/or the performing a second adjustment on the light transmittance of the switchable glass comprises: performing the second adjustment on the light transmittance of the switchable glass by performing a second regulation on an electrical signal applied to the switchable glass, wherein the second regulation comprises regulating the electrical signal based on a second electrical signal regulation information; and/or the performing a third adjustment on the light transmittance of the switchable glass comprises: performing the third adjustment on the light transmittance of the switchable glass by performing a third regulation on an electrical signal applied to the switchable glass, wherein the third regulation comprises regulating the electrical signal based on a third electrical signal regulation information; and/or the performing a fourth adjustment on the light transmittance of the switchable glass comprises: performing the fourth adjustment on the light transmittance of the switchable glass by performing a fourth regulation on an electrical signal applied to the switchable glass, wherein the fourth regulation comprises regulating the electrical signal based on a fourth electrical signal regulation information.

According to some exemplary embodiments, each of the first electrical signal regulation information, the second electrical signal regulation information, the third electrical signal regulation information and the fourth electrical signal regulation information comprises regulating at least one of an amplitude of the electrical signal applied to the switchable glass or a switching rate of the electrical signal applied to the switchable glass.

According to some exemplary embodiments, the method further includes determining the first electrical signal regulation information according to a predetermined second mapping relationship between the light intensity change information and an electrical signal regulation information in response to the light intensity change information meeting the first predetermined condition, wherein the first electrical signal regulation information corresponds to the light intensity change information meeting the first predetermined condition in the second mapping relationship; and/or determining the second electrical signal regulation information according to the predetermined second mapping relationship between the light intensity change information and an electrical signal regulation information in response to the light intensity change information meeting the second predetermined condition, wherein the second electrical signal regulation information corresponds to the light intensity change information meeting the second predetermined condition in the second mapping relationship; and/or determining the third electrical signal regulation information according to the predetermined second mapping relationship between the light intensity change information and an electrical signal regulation information in response to the light intensity change information meeting the third predetermined condition, wherein the third electrical signal regulation information corresponds to the light intensity change information meeting the third predetermined condition in the second mapping relationship; and/or determining the fourth electrical signal regulation information according to the predetermined second mapping relationship between the light intensity change information and an electrical signal regulation information in response to the light intensity change information meeting the fourth predetermined condition, wherein the fourth electrical signal regulation information corresponds to the light intensity change information meeting the fourth predetermined condition in the second mapping relationship.

According to some exemplary embodiments, the method further includes determining the first transmittance adjustment information according to a predetermined third mapping relationship between the vehicle position change information and the light transmittance adjustment information in response to the vehicle position change information meeting the first position condition, wherein the first transmittance adjustment information corresponds to the vehicle position change information meeting the first position condition in the third mapping relationship; and/or determining the third transmittance adjustment information according to the predetermined third mapping relationship between the vehicle position change information and the light transmittance adjustment information in response to the vehicle position change information meeting the second position condition, wherein the third transmittance adjustment information corresponds to the vehicle position change information meeting the second position condition in the third mapping relationship.

According to some exemplary embodiments, the vehicle position change information meeting the first position condition comprises: the vehicle being located outside an enclosed space and a distance from the vehicle to an entrance of the enclosed space being less than or equal to a first predetermined distance; and/or wherein the vehicle position change information meeting the second position condition comprises: the vehicle being located inside an enclosed space and a distance from the vehicle to an exit of the enclosed space being less than or equal to a second predetermined distance.

In another aspect, a method of controlling a switchable glass system for a vehicle is provided, the switchable glass system includes a switchable glass installed on the vehicle, the method includes: acquiring a light intensity by a detector installed on the vehicle; determining a light intensity change information by using the acquired light intensity as an input, and comparing the light intensity change information with a predetermined light intensity change threshold, wherein the light intensity change information comprises at least one of a light intensity value change or a light intensity change rate; and outputting a control instruction in response to the light intensity change information meeting a predetermined condition, wherein the control instruction is used to adjust a light transmittance of the switchable glass based on a transmittance adjustment information, wherein the transmittance adjustment information comprises adjusting at least one of a magnitude of the light transmittance of the switchable glass or a change rate of the light transmittance of the switchable glass.

According to some exemplary embodiments, the method further includes acquiring a position information of the vehicle, wherein the input further comprises the acquired position information.

In another aspect, a switchable glass system for a vehicle is provided, including: a switchable glass installed on the vehicle, where the switchable glass includes: a first base substrate and a second base substrate opposite to each other; a first electrode on the first base substrate; a second electrode on the second base substrate; and a switchable assembly sandwiched between the first base substrate and the second base substrate; and a controller electrically connected to the first electrode and the second electrode of the switchable glass, where the controller is configured to perform the methods described above.

### BRIEF DESCRIPTION OF THE DRAWINGS

With following descriptions of the present disclosure with reference to the accompanying drawings, other objectives and advantages of the present disclosure may be clear and the present disclosure may be understood comprehensively. In the accompanying drawings:
FIG. 1 shows a schematic plan view of a switchable glass according to some exemplary embodiments of the present disclosure;
FIG. 2 shows a cross-sectional view of the switchable glass taken along line AA' in FIG. 1 according to some exemplary embodiments of the present disclosure;
FIG. 3 schematically shows an influence of illumination on visual acuity;
FIG. 4 shows a schematic structural diagram of a switchable glass system for a vehicle according to an exemplary embodiment of the present disclosure;
FIG. 5 shows a flowchart of a method of controlling a switchable glass system according to some exemplary embodiments of the present disclosure;
FIG. 6A and FIG. 6B schematically show a variety of specific scenarios in which a method of controlling a switchable glass according to embodiments of the present disclosure may be applied, where FIG. 6A schematically shows a scenario of entering and exiting an enclosed space such as a tunnel/parking lot during the day, and FIG. 6B schematically shows a scenario of entering and exiting an enclosed space such as a tunnel/parking lot at night;
FIG. 7A and FIG. 7B show schematic diagrams of an electrical signal applied to the switchable glass changing over time;
FIG. 8 schematically shows an actual light intensity-time curve;
FIG. 9 schematically shows a light intensity change rate-time curve;
FIG. 10 shows a comparison between an actual light intensity change rate in a light intensity-time curve and a predetermined light intensity change rate threshold;
FIG. 11 shows a flowchart of a method of controlling a switchable glass system according to other exemplary embodiments of the present disclosure;
FIG. 12 shows a specific application diagram of a control method according to some exemplary embodiments of the present disclosure;
FIG. 13 shows a flowchart of a method of controlling a switchable glass system according to still other exemplary embodiments of the present disclosure;
FIG. 14 shows a specific application diagram of a control method according to still other exemplary embodiments of the present disclosure;
FIG. 15 shows a schematic diagram of a switchable glass system applied to a vehicle according to an embodiment of the present disclosure;
FIG. 16 shows a schematic structural diagram of a switchable glass in a switchable glass system according to an embodiment of the present disclosure; and
FIG. 17 shows a flowchart of a method of controlling a switchable glass system according to still other exemplary embodiments of the present disclosure.

It should be noted that for the sake of clarity, in the accompanying drawings used to describe embodiments of the present disclosure, sizes of layers, structures or regions may be enlarged or reduced, that is, these accompanying drawings are not drawn according to actual scale.

### DETAILED DESCRIPTION OF EMBODIMENTS

Technical solutions of the present disclosure will be further described in detail below through embodiments with reference to accompanying drawings. In the specification, the same or similar reference numerals represent the same or similar components. The following descriptions of embodiments of the present disclosure with reference to the accompanying drawings are intended to explain a general inventive concept of the present disclosure, and should not be understood as a limitation to the present disclosure.

In addition, in the following detailed descriptions, for the convenience of description, many specific details are set forth to provide comprehensive understanding of embodiments of the present disclosure. Clearly, one or more embodiments may also be implemented without these specific details.

It should be understood that, although the terms "first," "second" and so on may be used here to describe different elements, these elements should not be limited by these terms. These terms are merely used to distinguish one element from another element. For example, without departing from the scope of the exemplary embodiments, a first element may be named as a second element, and similarly, the second element may be named as the first element. The term "and/or" as used here includes any and all combinations of one or more related listed items.

The terms used herein are merely for a purpose of describing specific embodiments, and are not intended to limit exemplary embodiments. As used herein, unless otherwise specified in the context, a singular form is also intended to include a plural form. It should also be understood that when terms "containing" and/or "including" are used herein, it means that the described features, wholes, steps, operations, elements and/or components are provided, but do not exclude the presence or addition of one or more other features, wholes, steps, operations, elements, components and/or combinations thereof.

Herein, unless otherwise specified, the expression "enclosed space" refers to a space enclosed by a top surface and surrounding sides. In a vehicle operating environment, an enclosed space generally has a pre-designed entrance for vehicles to enter and an exit for vehicles to exit. For example, in the vehicle operating environment, the enclosed space may include an underground parking lot, a tunnel, or other spaces.

The expression "vehicle" includes movable means of transportation, including but not limited to two-wheeled motor vehicles, three-wheeled motor vehicles, four-wheeled motor vehicles, trains, etc.

The expression "light intensity", also known as illumination intensity, refers to a luminous flux of visible light received per unit area, measured in lux (or lx), which is used to indicate an intensity of illumination and a degree to which a surface area of an object is illuminated.

The inventors found through research that with a development of technology and a continuous improvement of user desires, the glass of the vehicle needs to have more and more functions. For example, in addition to a conventional light transmission function, the glass of the vehicle also needs to have functions such as displaying images and interacting with users. The glass of the vehicle with display, interaction and other functions requires a comprehensive use of thin-film transistor array, display control, multi-color pixel and other technologies. Therefore, a cost of the glass of the vehicle is greater than that of an ordinary glass of the vehicle. In order to meet user desires while taking costs into consideration, a current technical direction with a strong implementation potential is switchable glass. In other words, the switchable glass may be applied in vehicles to achieve functions such as displaying images and interacting with users in addition to the conventional light transmission function.

Technologies used in switchable glass may include PDLC (polymer dispersed liquid crystal), EC (electrochromic) and SPD (suspended particle device) technologies.

PDLC switchable glass was put into mass production early, with relatively low cost, and may achieve both transparency and frosting effects. In a power-on state, polymer dispersed liquid crystal molecules may be arranged in order and light may pass directly through the glass; in a power-off state, the polymer dispersed liquid crystal molecules may be arranged in disorder and light may be scattered to form a frosting effect. The PDLC switchable glass generally has a whitish color and may present soft natural light after being frosted.

In SPD switchable glass, suspended particles may absorb more than 99% of visible light. In a power-off state, the glass may be in a frosting state; in a power-on state, the suspended particles may be arranged in alignment (in order) to allow light to pass through. The SPD switchable glass enables a continuous adjustment of light. Due to characteristics of suspended particles, the SPD switchable glass requires a voltage of 110V and more comprehensive safety measures, which directly increases costs. The SPD switchable glass is generally blue and looks different from the PDLC glass.

In EC switchable glass, a light transmittance of the glass may be adjusted using color changes caused by materials and electric fields. The EC switchable glass consists of three portions including an ion storage layer, a solid electrolyte and an electrochromic layer, and has characteristics of low voltage, low frosting level and power-off memory. Under an action of the electric field, a reflectivity, a transmittance and an absorptivity of the electrochromic layer may change, thereby altering light passing through the glass. In terms of color, the EC switchable glass mainly comes in gray or blue.

In an embodiment of the present disclosure, the switchable glass may include dye liquid crystal switchable glass.

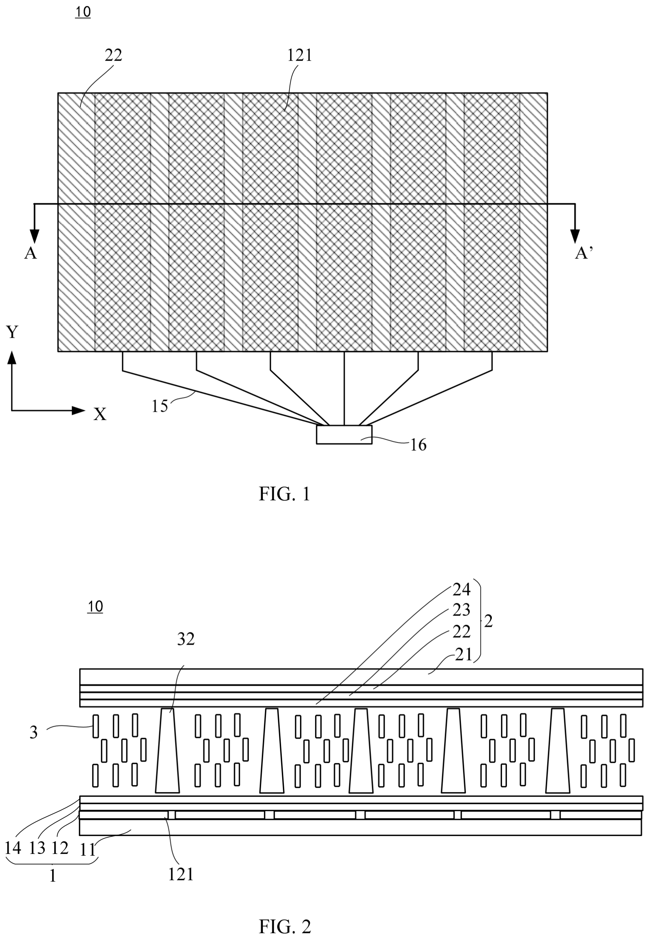

FIG. 1 shows a schematic plan view of a switchable glass according to some exemplary embodiments of the present disclosure. FIG. 2 shows a cross-sectional view of the switchable glass taken along line AA' in FIG. 1 according to some exemplary embodiments of the present disclosure.

Referring to FIG. 1 and FIG. 2, a switchable glass 10 may include a first switchable substrate 1 and a second switchable substrate 2 opposite to each other, and a switchable assembly 3 sandwiched between the first switchable substrate 1 and the second switchable substrate 2.

The first switchable substrate 1 may include a first base substrate 11, a first electrode 12, a first insulation layer 13 and a first alignment layer 14. The first electrode 12, the first insulation layer 13 and the first alignment layer 14 are sequentially arranged on the first base substrate 11.

The second switchable substrate 2 may include a second base substrate 21, a second electrode 22 and a second alignment layer 24. The second electrode 22 and the second alignment layer 24 are sequentially arranged on the second base substrate 21.

The switchable glass 10 may further include a spacer 32 to provide support. Optionally, the spacer 32 may be a spherical spacer 32, a columnar spacer 32, or a spacer 32 of other shapes. The spacer 32 may be made of a transparent material or a non-transparent material.

For example, the first base substrate 11 and the second base substrate 21 may be transparent glass substrates. For example, the switchable glass 10 may be applied to fields such as architecture, transportation and interior design to achieve switching between a transparent state and a non-transparent state (such as a dark state or a frosting state), and a continuous change in the transparency of the glass.

For example, the first electrode 12 and the second electrode 22 may be transparent electrodes, which may be made of, for example, a transparent conductive material such as indium tin oxide (ITO).

In some embodiments of the present disclosure, the switchable assembly 3 may include a liquid crystal layer. For example, the liquid crystal layer may include dye liquid crystal. Specifically, the liquid crystal layer may include liquid crystal molecules and color dye molecules mixed with the liquid crystal molecules. For example, the color dye molecules may be dichroic dye molecules.

The first electrode 12 of the first switchable substrate 1 includes a plurality of first sub-electrodes 121. The plurality of first sub-electrodes 121 are arranged on the first base substrate 11 at intervals. That is, an orthographic projection of the first electrode 12 on the first base substrate 11 is in a shape of a plurality of strips arranged at intervals. It should be understood that each first sub-electrode 121 is a transparent first sub-electrode 121. For example, each first sub-electrode 121 is made of a transparent conductive material such as ITO.

Referring to FIG. 1 and FIG. 2, the switchable glass 10 may further include a plurality of wires 15 on the first base substrate 11. In an example, the plurality of wires may correspond to the plurality of first sub-electrodes 121, respectively. For example, each wire may be a conductive wire made of a conductive material.

Referring to FIG. 1 and FIG. 2, the switchable glass 10 may further include a driving circuit 16 such as IC, the driving circuit 16 is used to provide an electrical signal. Specifically, the plurality of wires may electrically connect respective first sub-electrodes 121 to the driving circuit 16 such as IC, so that control signals provided by the driving circuit 16 may be provided to the plurality of first sub-electrodes 121, respectively.

The second electrode 22 of the second switchable substrate 2 may be a planar electrode, that is, an orthographic projection of the second electrode 22 on the second base substrate 21 has a continuously distributed planar shape. For example, in the embodiments of FIG. 1, the orthographic projection of the second electrode 22 on the second base substrate 21 is in a shape of a complete rectangle.

In an example, as shown in FIG. 1, the orthographic projection of the first electrode 12 on the first base substrate 11 falls within the orthographic projection of the second electrode 22 on the first base substrate 11.

It should be understood that the second electrode 22 may also be electrically connected to the driving circuit 16 such as IC through a conductive structure (such as wire), so that the control signal provided by the driving circuit 16 may be provided to the second electrode 22.

In the switchable glass provided in embodiments of the present disclosure, when no voltage is applied to the first electrode 12 and the second electrode 22, no electric field is generated between the first electrode 12 and the second electrode 22, and the liquid crystal molecules and the color dye molecules in the switchable assembly 3 are vertically oriented and do not absorb light, so that the switchable glass is in a light-transmitting state (i.e., completely transparent state). When a predetermined voltage is applied to the first electrode 12 and the second electrode 22, an electric field is generated between the first electrode 12 and the second electrode 22, and the liquid crystal molecules and the color dye molecules in the liquid crystal layer 3 are deflected, then the liquid crystal molecules are arranged horizontally under the action of the electric field, and the color dye molecules are induced to be arranged horizontally to absorb light, so that the switchable glass is in an opaque state (i.e., completely dark state), or the switchable glass has a transparency between a completely dark and a completely transparent.

In such embodiments, the switchable glass provided by embodiments of the present disclosure is described by taking dye liquid crystal as an example. It should be understood that the switchable glass provided by embodiments of the present disclosure is not limited to dye liquid crystal switchable glass, and may also include other types of switchable glass, including but not limited to PDLC switchable glass, SPD switchable glass, EC switchable glass, etc.

The inventors found that when a vehicle enters and exits an enclosed space such as a parking lot or a tunnel, an ambient light intensity outside the vehicle may have a sudden change, and occupants in the vehicle may not immediately adapt to the sudden change in light intensity. For example, for a driver, the sudden change in light intensity may cause the driver to be unable to see the surrounding environment clearly for a short period of time, which may lead to driving hazards; for a passenger in the vehicle, the sudden change in light intensity may cause a physiological discomfort.

In order to solve at least one aspect of the above technical problems, an embodiment of the present disclosure provides a method of controlling a switchable glass system for a vehicle, which may adaptively determine a transmittance adjustment information of switchable glass, so as to reasonably control a light transmittance of the switchable glass based on the transmittance adjustment information, thereby at least reducing or even avoiding the problems caused by the sudden change in the ambient light intensity outside the vehicle.

It should be noted that herein, unless otherwise specified, "light intensity change information" includes at least one of a light intensity value change or a light intensity change rate, and the "transmittance adjustment information" includes adjusting at least one of a magnitude of the light transmittance or a change rate of the light transmittance.

A theoretical foundation of embodiments of the present disclosure is phenomenon of light adaptation and dark adaptation of human eyes to light changes. Specifically, in a process of human being walking from a bright place to a dark place, a light change may cause eyes to become temporarily blind, it takes some time for the sensitivity of retina to gradually increase, and then the eyes may gradually see objects in the dark, which is the phenomenon of dark adaptation. In a process of human being walking from a dark place to a bright place, especially to a bright place under strong light, eyes may initially feel the light is dazzling and may hardly see outside things clearly, and it takes a few seconds to gradually see the object clearly, which is the phenomenon of light adaptation.

Due to a rapid light adaptation of cone cells, the light adaptation requires a very short time, which may be about a few seconds. The dark adaptation generally requires a longer time than the light adaptation, which may be, for example, several minutes or tens of minutes.

For example, in a process of a vehicle passing through a tunnel, if the vehicle enters the tunnel during the day, a lighting condition in the tunnel is not as bright as outside, and a driver vision may be disturbed by the light, resulting in a dark adaptation. In this case, if the lighting condition in the tunnel is improper, it is easy to cause safety accidents.

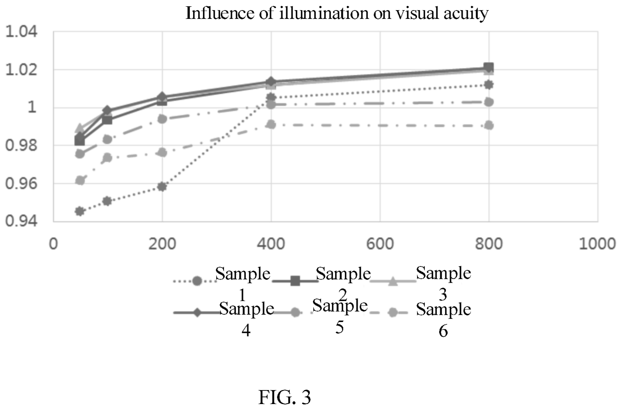

Another theoretical foundation of embodiments of the present disclosure is a dependence of visual acuity on illumination. Under different illuminations, the visual acuity may increase with an increase of illumination, and there is no significant difference in the visual acuity between different genders under the same illumination. A researcher measured visions of male and female students under illuminations of 20 Ix to 800 Ix. As shown in FIG. 3, the visions of six samples (i.e., male and female students) measured under illuminations of 20 Ix to 800 Ix are schematically shown. The results show that: the visual acuity increases significantly under illuminations of 200 Ix to 400 Ix, the visual acuity increases slowly and has no significant difference with an increase of illumination under illuminations of above 400 Ix.

Embodiments of the present disclosure will be further described in detail below with reference to the accompanying drawings.

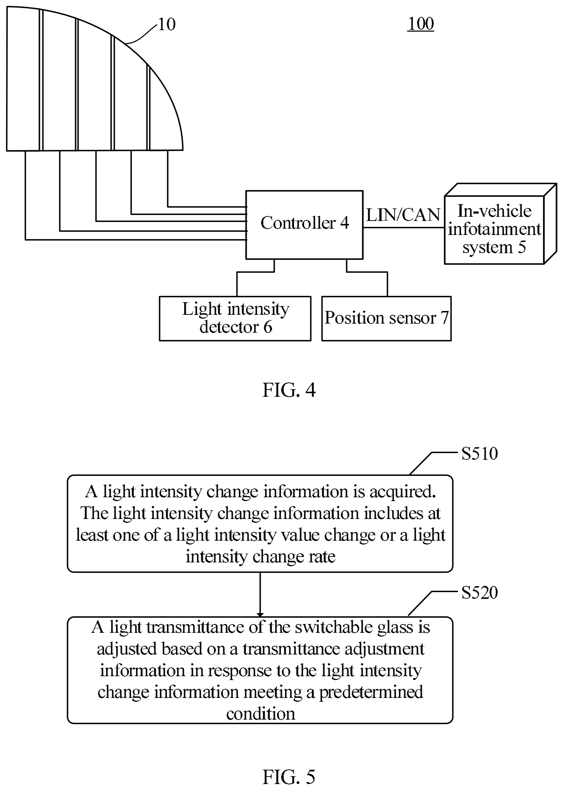

In some embodiments of the present disclosure, a switchable glass system for a vehicle is provided. FIG. 4 shows a schematic structural diagram of a switchable glass system for a vehicle according to an exemplary embodiment of the present disclosure. Referring to FIG. 1 to FIG. 4, the switchable glass system 100 includes switchable glass 10 and a controller 4. The switchable glass may be implemented based on one or more embodiments of FIG. 1 to FIG. 2 and installed on the vehicle. The controller 4 is electrically connected to the first electrode 12 and the second electrode 22 of the switchable glass 10. For example, the controller 4 may be further connected to an in-vehicle infotainment system 5 of the vehicle. The controller 4 may be connected to the in-vehicle infotainment system 5 of the vehicle via a LIN or CAN bus.

An operating process of the controller 4 will be further described below with reference to a specific control method.

FIG. 5 shows a flowchart of a method of controlling a switchable glass system according to some exemplary embodiments of the present disclosure. The control method includes steps S510 to S520.

In step S510, a light intensity change information is acquired. The light intensity change information includes at least one of a light intensity value change or a light intensity change rate. For example, the light intensity change information may be a light intensity change information of a region where the switchable glass 10 is located, or a light intensity change information of an environment where the vehicle is located.

In step S520, a light transmittance of the switchable glass is adjusted based on a transmittance adjustment information in response to the light intensity change information meeting a predetermined condition.

In embodiments of the present disclosure, the transmittance adjustment information includes adjusting at least one of a magnitude of the light transmittance of the switchable glass or a change rate of the light transmittance of the switchable glass.

In some exemplary embodiments, in step S520, the transmittance adjustment information is determined according to a predetermined first mapping relationship between the light intensity change information and the light transmittance adjustment information, in response to the light intensity change information meeting the predetermined condition. The determined transmittance adjustment information corresponds to the light intensity change information meeting the predetermined condition in the first mapping relationship; and then the light transmittance of the switchable glass is adjusted based on the transmittance adjustment information.

In an example, the first mapping relationship may include a predetermined mapping relationship table between the light intensity change information and the light transmittance adjustment information, as shown in Table 1 below. Table 1 includes fields such as serial number, light intensity change information, transmittance adjustment information (including adjusting a magnitude of transmittance, adjusting a change rate of transmittance), etc.

It should be noted that Table 1 exemplarily shows sixteen predetermined mapping relationships between the light intensity change information and the light transmittance adjustment information. The sixteen mapping relationships listed in Table 1 are merely exemplary descriptions, and embodiments of the present disclosure may further include other mapping relationships.

It should also be noted that in Table 1, the mapping relationship table between the light intensity change information and the transmittance adjustment information is exemplarily shown by taking entering and exiting a tunnel as an example, which is merely exemplary. It should be understood that the mapping relationship table between the light intensity change information and the transmittance adjustment information may further include scenarios of entering and exiting other types of enclosed spaces.

Referring to Table 1, for example, mapping relationships 1 to 8 may be provided for scenarios of entering a tunnel, and mapping relationships 9 to 16 may be provided for scenarios of exiting a tunnel. Specifically, in mapping relationships 1 to 4, the light intensity in the tunnel is greater than expected when the vehicle enters the tunnel, for example, when the vehicle enters a tunnel with a good lighting condition on a cloudy day. In response to such light intensity change information, Table 1 lists a variety of different mapping relationships, for example, a magnitude of transmittance and a change rate of transmittance in the transmittance adjustment information may be predetermined accordingly.

Specifically, the predetermined mapping relationship in Table 1 may be determined based on human physiological characteristics, where the human physiological characteristics include but are not limited to light adaptation and dark adaptation of human eyes. For example, in mapping relationship 6 of Table 1, when the vehicle enters a tunnel, the light intensity change information indicates that the light intensity inside the tunnel is lower. In this case, according to the dark adaptation of human eyes to the ambient light intensity, it is possible to increase the transmittance of the switchable glass, and the change rate of transmittance may be slow(small) to match the dark adaptation process of human eyes to the ambient light intensity. For example, in mapping relationship 10 of Table 1, when the vehicle exits a tunnel, the light intensity change information indicates that the light intensity outside the tunnel is higher. In this case, it is possible to reduce the transmittance of the switchable glass, and the change rate of transmittance is slow to match the light adaptation process of human eyes to the ambient light intensity.

**Table 1**

| Mapping Relationship Between Light Intensity Change Information And Transmittance Adjustment Information | | | |
|---|---|---|---|
| Serial number | Light intensity change information | Transmittance adjustment information | |
| | | Adjusting magnitude of transmittance | Adjusting change rate of transmittance |
| 1 | Light intensity inside tunnel is higher (e.g., entering a tunnel with good lighting condition on cloudy day) | Reduce | Rapid |
| 2 | Light intensity inside tunnel is higher (e.g., entering a tunnel with good lighting condition on cloudy day) | Reduce | Slow |
| 3 | Light intensity inside tunnel is higher (e.g., entering a tunnel with good lighting condition on cloudy day) | Increase | Rapid |
| 4 | Light intensity inside tunnel is higher (e.g., entering a tunnel with good lighting condition on cloudy day) | Increase | Slow |
| 5 | Light intensity inside tunnel is lower (in most cases, especially when entering a dim tunnel from bright outside) | Increase | Rapid |
| 6 | Light intensity inside tunnel is lower (in most cases, especially when entering a dim tunnel from bright outside) | Increase | Slow |
| 7 | Light intensity inside tunnel is lower (in most cases, especially when entering a dim tunnel from bright outside) | Reduce | Rapid |
| 8 | Light intensity inside tunnel is lower (in most cases, especially when entering a dim tunnel from bright outside) | Reduce | Slow |
| 9 | Light intensity outside tunnel is higher (in most cases, especially when exiting from a dim tunnel to bright outside) | Reduce | Rapid |
| 10 | Light intensity outside tunnel is higher (in most cases, especially when exiting from a dim tunnel to bright outside) | Reduce | Slow |
| 11 | Light intensity outside tunnel is higher (in most cases, especially when exiting from a dim tunnel to bright outside) | Increase | Rapid |
| 12 | Light intensity outside tunnel is higher (in most cases, especially when exiting from a dim tunnel to bright outside) | Increase | Slow |
| 13 | Light intensity outside tunnel is lower | Increase | Rapid |
| 14 | Light intensity outside tunnel is lower | Increase | Slow |
| 15 | Light intensity outside tunnel is lower | Reduce | Rapid |
| 16 | Light intensity outside tunnel is lower | Reduce | Slow |

In an example, the predetermined mapping relationship in Table 1 may be determined based on user's personal preferences. For example, in mapping relationship 5 of Table 1, when the vehicle enters a tunnel, the light intensity change information indicates that the light intensity inside the tunnel is lower, then the transmittance of the switchable glass may be increased, and the change rate of the transmittance is rapid(large), so that external light may be acquired rapidly by the user.

In an example, the first mapping relationship may include a predetermined mapping relationship table between the light intensity change information and the light transmittance adjustment information, as shown in Table 2 below. Table 2 includes fields such as serial number, initial state of switchable glass, scenario information, light intensity change information, transmittance adjustment information (including adjusting a magnitude of transmittance and adjusting a change rate of transmittance). In Table 2, the initial state of the switchable glass is a bright state. In other embodiments, the initial state of the switchable glass may be a dark state. Accordingly, when the initial state of the switchable glass is a dark state, at least sixteen mapping relationships between the light intensity change information and the transmittance adjustment information may be predetermined.

**Table 2**

| Mapping Relationship Between Light Intensity Change Information And Transmittance Adjustment Information | | | | | |
|---|---|---|---|---|---|
| Serial number | Initial state of switchable glass | Scenario information | Light intensity change information | Transmittance adjustment information | |
| | | | | Adjusting magnitude of transmittance | Adjusting change rate of transmittance |
| 1 | Bright state | Entering tunnel | Light intensity inside tunnel is higher (e.g., entering a tunnel with good lighting condition on cloudy day) | Reduce | Rapid |
| 2 | Bright state | Entering tunnel | Light intensity inside tunnel is higher (e.g., entering a tunnel with good lighting condition on cloudy day) | Reduce | Slow |
| 3 | Bright state | Entering tunnel | Light intensity inside tunnel is higher (e.g., entering a tunnel with good lighting condition on cloudy day) | Increase | Rapid |
| 4 | Bright state | Entering tunnel | Light intensity inside tunnel is higher (e.g., entering a tunnel with good lighting condition on cloudy day) | Increase | Slow |
| 5 | Bright state | Entering tunnel | Light intensity inside tunnel is lower (in most cases, especially when entering a dim tunnel from bright outside) | Increase | Rapid |
| 6 | Bright state | Entering tunnel | Light intensity inside tunnel is lower (in most cases, especially when entering a dim tunnel from bright outside) | Increase | Slow |
| 7 | Bright state | Entering tunnel | Light intensity inside tunnel is lower (in most cases, especially when entering a dim tunnel from bright outside) | Reduce | Rapid |
| 8 | Bright state | Entering tunnel | Light intensity inside tunnel is lower (in most cases, especially when entering a dim tunnel from bright outside) | Reduce | Slow |
| 9 | Bright state | Exiting tunnel | Light intensity outside tunnel is higher (in most cases, especially when exiting from a dim tunnel to bright outside) | Reduce | Rapid |
| 10 | Bright state | Exiting tunnel | Light intensity outside tunnel is higher (in most cases, especially when exiting from a dim tunnel to bright outside) | Reduce | Slow |
| 11 | Bright state | Exiting tunnel | Light intensity outside tunnel is higher (in most cases, especially when exiting from a dim tunnel to bright outside) | Increase | Rapid |
| 12 | Bright state | Exiting tunnel | Light intensity outside tunnel is higher (in most cases, especially when exiting from a dim tunnel to bright outside) | Increase | Slow |
| 13 | Bright state | Exiting tunnel | Light intensity outside tunnel is lower | Increase | Rapid |
| 14 | Bright state | Exiting tunnel | Light intensity outside tunnel is lower | Increase | Slow |
| 15 | Bright state | Exiting tunnel | Light intensity outside tunnel is lower | Reduce | Rapid |
| 16 | Bright state | Exiting tunnel | Light intensity outside tunnel is lower | Reduce | Slow |

In some exemplary embodiments, when predetermining the mapping relationship between the light intensity change information and the transmittance adjustment information, it is possible to consider the initial state of the switchable glass, the scenario information and other factors. For example, in mapping relationship 3, the initial state of the switchable glass is the bright state, and the corresponding transmittance adjustment information is to increase the transmittance of the switchable glass. For example, if the switchable glass has been changed to a brightest state, then the "increase the transmittance of the switchable glass" here is a null value, that is, when the switchable glass has been changed to the brightest state, the transmittance of the switchable glass may not be further increased.

It should be noted that Table 1 and Table 2 schematically show some fields, which are merely exemplary. In other embodiments, the fields in the mapping relationship tables between the light intensity change information and the transmittance adjustment information may be modified, added or reduced by the user.

In embodiments of the present disclosure, adjusting the light transmittance of the switchable glass may include: adjusting the light transmittance of the switchable glass by regulating an electrical signal applied to the switchable glass, where the electrical signal is regulated based on an electrical signal regulation information.

In an example, in embodiments of the present disclosure, the electrical signal regulation information includes: adjusting at least one of an amplitude or a switching rate of the electrical signal applied to the switchable glass.

In embodiments of the present disclosure, regulating the amplitude of the electrical signal corresponds to adjusting the magnitude of the transmittance of the switchable glass, and regulating the switching rate of the electrical signal corresponds to adjusting the change rate of the transmittance.

In some exemplary embodiments, the control method further includes: determining the electrical signal regulation information according to a predetermined second mapping relationship between the light intensity change information and the electrical signal regulation information in response to the light intensity change information meeting a predetermined condition, where the determined electrical signal regulation information corresponds to the light intensity change information meeting the predetermined condition in the second mapping relationship.

In an example, the second mapping relationship may include a predetermined mapping relationship table between the light intensity change information and the electrical signal regulation information, as shown in Table 3 below.

Table 3 includes fields such as serial number, light intensity change information, electrical signal regulation information (including adjusting an amplitude of electrical signal and adjusting a switching rate of electrical signal).

It should be noted that Table 3 exemplarily shows sixteen predetermined mapping relationships between the light intensity change information and the electrical signal regulation information. The sixteen mapping relationships listed in Table 3 are merely exemplary descriptions, and embodiments of the present disclosure may further include other mapping relationships.

It should also be noted that in Table 3, the mapping relationship table between the light intensity change information and the electrical signal regulation information is exemplarily shown by taking entering and exiting a tunnel as an example, which is merely exemplary. It should be understood that the mapping relationship table between the light intensity change information and the electrical signal regulation information may further include scenarios of entering and exiting other types of enclosed spaces.

**Table 3**

| Mapping Relationship Between Light Intensity Change Information And Electrical Signal Regulation Information | | | |
|---|---|---|---|
| Serial number | Light intensity change information | Electrical signal regulation information | |
| | | Adjusting amplitude of electrical signal | Adjusting switching rate of electrical signal |
| 1 | Light intensity inside tunnel is higher (e.g., entering a tunnel with good lighting condition on cloudy day) | Reduce | Rapid |
| 2 | Light intensity inside tunnel is higher (e.g., entering a tunnel with good lighting condition on cloudy day) | Reduce | Slow |
| 3 | Light intensity inside tunnel is higher (e.g., entering a tunnel with good lighting condition on cloudy day) | Increase | Rapid |
| 4 | Light intensity inside tunnel is higher (e.g., entering a tunnel with good lighting condition on cloudy day) | Increase | Slow |
| 5 | Light intensity inside tunnel is lower (in most cases, especially when entering a dim tunnel from bright outside) | Increase | Rapid |
| 6 | Light intensity inside tunnel is lower (in most cases, especially when entering a dim tunnel from bright outside) | Increase | Slow |
| 7 | Light intensity inside tunnel is lower (in most cases, especially when entering a dim tunnel from bright outside) | Reduce | Rapid |
| 8 | Light intensity inside tunnel is lower (in most cases, especially when entering a dim tunnel from bright outside) | Reduce | Slow |
| 9 | Light intensity outside tunnel is higher (in most cases, especially when exiting from a dim tunnel to bright outside) | Reduce | Rapid |
| 10 | Light intensity outside tunnel is higher (in most cases, especially when exiting from a dim tunnel to bright outside) | Reduce | Slow |
| 11 | Light intensity outside tunnel is higher (in most cases, especially when exiting from a dim tunnel to bright outside) | Increase | Rapid |
| 12 | Light intensity outside tunnel is higher (in most cases, especially when exiting from a dim tunnel to bright outside) | Increase | Slow |
| 13 | Light intensity outside tunnel is lower | Increase | Rapid |
| 14 | Light intensity outside tunnel is lower | Increase | Slow |
| 15 | Light intensity outside tunnel is lower | Reduce | Rapid |
| 16 | Light intensity outside tunnel is lower | Reduce | Slow |

It should be noted that the second mapping relationship between the light intensity change information and the electrical signal regulation information will be further described in detail below with reference to the accompanying drawings.

In embodiments of the present disclosure, it is possible to regulate the amplitude and the switching rate of the electrical signal applied to the switchable glass according to the light intensity change information, thereby adjusting the magnitude of the light transmittance of the switchable glass and the change rate of the light transmittance of the switchable glass.

It should be noted that the method according to embodiments of the present disclosure may be applied to switchable glasses that use different dimming technologies, and the electrical signal applied to the switchable glass may include a voltage signal or a current signal. For example, when the method according to embodiments of the present disclosure is applied to a switchable glass that uses dye liquid crystal dimming technology, the electrical signal applied to the switchable glass may include a voltage signal.

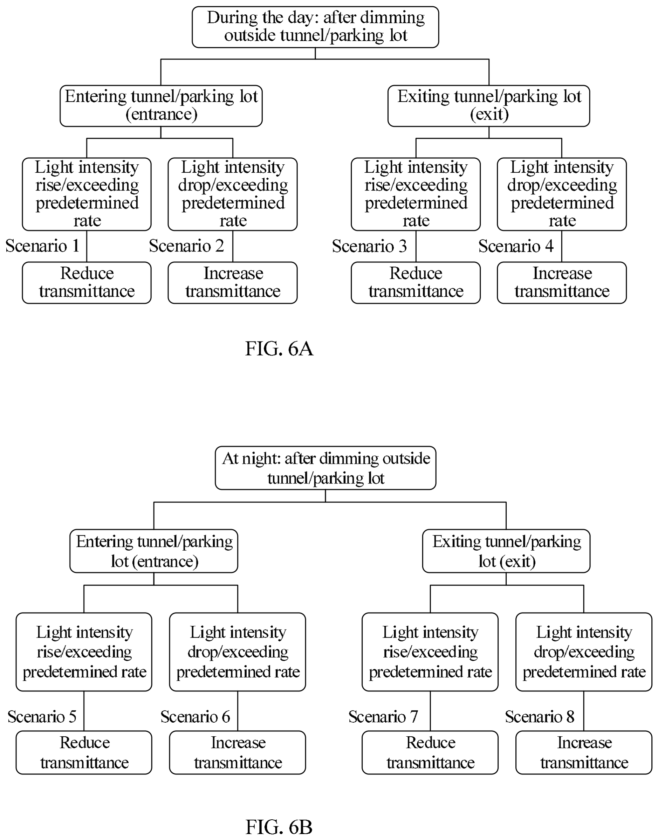

FIG. 6A and FIG. 6B schematically show a variety of specific scenarios in which the method of controlling the switchable glass according to embodiments of the present disclosure may be applied, where FIG. 6A schematically shows a scenario of entering and exiting an enclosed space such as a tunnel/parking lot during the day, and FIG. 6B schematically shows a scenario of entering and exiting an enclosed space such as a tunnel/parking lot at night.

Referring to FIG. 6A, in scenario 1, a vehicle enters an enclosed space such as a tunnel or a parking lot during the day, and acquires a light intensity change information inside the enclosed space. For example, it is possible to detect a light intensity value of the vehicle inside the enclosed space by a light intensity detector, and then compare an actual light intensity value detected with a predetermined light intensity value. Upon comparison, it is determined that the actual light intensity value is greater than the predetermined light intensity value, that is, a light intensity rise is acquired. In scenario 1, it is possible to regulate the electrical signal applied to the switchable glass according to the light intensity change information (i.e., the light intensity rise), such as increasing a voltage applied to the switchable glass, so as to reduce the light transmittance of the switchable glass. That is, in scenario 1, when the light intensity rise inside the enclosed space is acquired, the light transmittance of the switchable glass may be reduced, so that the light intensity change perceived by the driver and passengers in the vehicle is slower than the actual light intensity change, which helps to reduce or even avoid problems caused by a sudden change in light intensity.

It should be noted that the predetermined light intensity value may be determined according to light intensity values obtained in advance in various different environments.

For example, the light intensities in different environments may be obtained in advance as follows: 100,000 Ix in summer sunshine; 10,000 Ix outdoors on a cloudy day; 1,000 Ix in a TV studio; 300 Ix on a table 60 cm away from a 60W desk lamp; 100 Ix under indoor fluorescent lamp; 10 Ix to 15 Ix under candlelight (20 cm away); 10 Ix indoors at dusk; and 0.1 Ix under street lights at night. The predetermined light intensity value may be determined according to the light intensity values obtained in advance in various different environments.

Continuing to refer to FIG. 6A, in scenario 2, a vehicle enters an enclosed space such as a tunnel or a parking lot during the day, and acquires a light intensity change information inside the enclosed space. For example, it is possible to detect a light intensity value of the vehicle inside the enclosed space by a light intensity detector, and then compare an actual light intensity value detected with a predetermined light intensity value. Upon comparison, it is determined that the actual light intensity value is less than the predetermined light intensity value, that is, a light intensity drop is acquired. In scenario 2, it is possible to regulate the electrical signal applied to the switchable glass according to the light intensity change information (i.e., the light intensity drop), such as reducing a voltage applied to the switchable glass, so as to increase the light transmittance of the switchable glass. That is, in scenario 2, when the light intensity drop inside the enclosed space is acquired, the light transmittance of the switchable glass may be increased, so that the light intensity change perceived by the driver and passengers in the vehicle is slower than the actual light intensity change, which helps to reduce or even avoid problems caused by a sudden change in light intensity.

According to scenario 2, in step S510, acquiring the light intensity change information includes acquiring the light intensity change information in a process of the vehicle passing through an entrance of the enclosed space. In step S520, the light intensity change information meeting the predetermined condition includes: an actual light intensity value detected outside the enclosed space being greater than a first predetermined light intensity threshold; and/or an actual light intensity value detected inside the enclosed space being less than a second predetermined light intensity threshold. The first predetermined light intensity threshold may be an average light intensity value outside the tunnel during the day, and the second predetermined light intensity threshold may be an average light intensity value inside the tunnel during the day.

Continuing to refer to FIG. 6A, in scenario 3, a vehicle exits an enclosed space such as a tunnel or a parking lot during the day, and acquires a light intensity change information outside the enclosed space. For example, it is possible to detect a light intensity value of the vehicle outside the enclosed space by a light intensity detector, and then compare an actual light intensity value detected with a predetermined light intensity value. Upon comparison, it is determined that the actual light intensity value is greater than the predetermined light intensity value, that is, a light intensity rise is acquired. In scenario 3, it is possible to regulate the electrical signal applied to the switchable glass according to the light intensity change information (i.e., the light intensity rise), such as increasing a voltage applied to the switchable glass, so as to reduce the light transmittance of the switchable glass. That is, in scenario 3, when the light intensity rise inside the enclosed space is acquired, the light transmittance of the switchable glass may be reduced, so that the light intensity change perceived by the driver and passengers in the vehicle is slower than the actual light intensity change, which helps to reduce or even avoid problems caused by a sudden change in light intensity.

According to scenario 3, in step S510, acquiring the light intensity change information includes acquiring the light intensity change information in a process of the vehicle passing through an exit of the enclosed space. In step S520, the light intensity change information meeting the predetermined condition includes: the actual light intensity value detected inside the enclosed space being less than a third predetermined light intensity threshold; and/or the actual light intensity value detected outside the enclosed space being greater than a fourth predetermined light intensity threshold. The third predetermined light intensity threshold may be an average light intensity value inside the tunnel during the day, and the fourth predetermined light intensity threshold may be an average light intensity value outside the tunnel during the day.

Continuing to refer to FIG. 6A, in scenario 4, a vehicle exits an enclosed space such as a tunnel or a parking lot during the day, and acquires a light intensity change information inside the enclosed space. For example, it is possible to detect a light intensity value of the vehicle inside the enclosed space by a light intensity detector, and then compare an actual light intensity value detected with a predetermined light intensity value. Upon comparison, it is determined that the actual light intensity value is less than the predetermined light intensity value, that is, a light intensity drop is acquired. In scenario 4, it is possible to regulate the electrical signal applied to the switchable glass according to the light intensity change information (i.e., the light intensity rise), such as reducing a voltage applied to the switchable glass, so as to increase the light transmittance of the switchable glass. That is, in scenario 4, when the light intensity drop inside the enclosed space is acquired, the light transmittance of the switchable glass may be increased, so that the light intensity change perceived by the driver and passengers in the vehicle is slower than the actual light intensity change, which helps to reduce or even avoid problems caused by a sudden change in light intensity.

In embodiments of the present disclosure, the light intensity change information meeting the predetermined condition may include: an absolute value of a difference between the actual light intensity value detected and the predetermined light intensity value being greater than a first predetermined light intensity difference threshold.

For example, the first predetermined light intensity difference threshold may be substantially 0, that is, the predetermined light intensity values inside and outside the enclosed space may be set according to empirical values obtained in advance. When the vehicle enters the enclosed space, for example, in scenario 2, if the actual light intensity value is less than the predetermined light intensity value inside the enclosed space, that is, the enclosed space is darker than a general enclosed space, then the light transmittance of the glass may be adaptively increased; when the vehicle exits the enclosed space, for example, in scenario 3, if the actual light intensity value is greater than the predetermined light intensity value outside the enclosed space, that is, it is brighter outside the enclosed space than normal, then the light transmittance of the glass may be adaptively reduced. In this way, the light intensity change perceived by the driver and passengers in the vehicle may be slower than the actual light intensity change, which helps to reduce or even avoid problems caused by a sudden change in light intensity.

In embodiments of the present disclosure, the light intensity change information meeting the predetermined condition may further include: an absolute value of a difference between actual light intensity values detected at two time instants being greater than a second predetermined light intensity difference threshold.

When the vehicle enters the enclosed space, for example, in scenario 2, an absolute value of a difference between an actual light intensity value detected at a first time instant (for example, a time instant when the vehicle is outside the enclosed space) and an actual light intensity value detected at a second time instant (for example, a time instant when the vehicle has entered the enclosed space) is greater than the second predetermined light intensity difference threshold. The "second predetermined light intensity difference threshold" may be an absolute value of a difference between predetermined light intensity values inside and outside the enclosed space set according to empirical values obtained in advance. For example, when it is particularly bright outside the enclosed space or it is particularly dark inside the enclosed space, the absolute value of the difference between the actual light intensity value detected at the first time instant and the actual light intensity value detected at the second time instant may be greater than the second predetermined light intensity difference threshold. That is, when the vehicle enters the enclosed space, the light intensity drop outside the vehicle exceeds a predetermined level. In this case, it is possible to increase the light transmittance of the switchable glass, so that the light intensity change perceived by the driver and passengers in the vehicle may be slower than the actual light intensity change, which helps to reduce or even avoid problems caused by a sudden change in light intensity.

When the vehicle exits the enclosed space, for example, in scenario 4, an absolute value of a difference between an actual light intensity value detected at a third time instant (for example, a time instant when the vehicle is inside the enclosed space) and an actual light intensity value detected at a fourth time instant (for example, a time instant when the vehicle has exited the enclosed space) is greater than the second predetermined light intensity difference threshold. For example, when it is particularly bright outside the enclosed space or it is particularly dark inside the enclosed space, the absolute value of the difference between the actual light intensity value detected at the third time instant and the actual light intensity value detected at the fourth time instant may be greater than the second predetermined light intensity difference threshold. That is, when the vehicle exits the enclosed space, the light intensity rise outside the vehicle exceeds a predetermined level. In this case, it is possible to reduce the light transmittance of the switchable glass, so that the light intensity change perceived by the driver and passengers in the vehicle may be slower than the actual light intensity change, which helps to reduce or even avoid problems caused by a sudden change in light intensity.

Referring to FIG. 6B, in scenario 5, the vehicle enters an enclosed space such as a tunnel or a parking lot at night, and acquires a light intensity change information inside the enclosed space. At night, an outside environment is generally dark, while tunnels and parking lots are illuminated and brighter than the outside environment. For example, it is possible to detect the light intensity value of the vehicle inside the enclosed space by a light intensity detector, and then compare the actual light intensity value detected with a predetermined light intensity value. Upon comparison, it is determined that the actual light intensity value is greater than the predetermined light intensity value, that is, a light intensity rise is acquired. In scenario 5, it is possible to regulate the electrical signal applied to the switchable glass according to the light intensity change information (i.e., the light intensity rise), such as increasing the voltage applied to the switchable glass, so as to reduce the light transmittance of the switchable glass. That is, in scenario 5, when the light intensity rise inside the enclosed space is acquired, the light transmittance of the switchable glass may be reduced, so that the light intensity change perceived by the driver and passengers in the vehicle may be slower than the actual light intensity change, which helps to reduce or even avoid problems caused by a sudden change in light intensity.

Continuing to refer to FIG. 6B, in scenario 6, the vehicle enters an enclosed space such as a tunnel or a parking lot at night, and acquires a light intensity change information inside the enclosed space. For example, it is possible to detect the light intensity value of the vehicle inside the enclosed space by a light intensity detector, and then compare the actual light intensity value detected with the predetermined light intensity value. Upon comparison, it is determined that the actual light intensity value is less than the predetermined light intensity value. For example, if the illumination in the tunnel does not meet expectations, a light intensity drop may be acquired. In scenario 6, it is possible to regulate the electrical signal applied to the switchable glass according to the light intensity change information (i.e., the light intensity drop), such as reducing the voltage applied to the switchable glass, so as to increase the light transmittance of the switchable glass. That is, in scenario 6, when the light intensity drop inside the enclosed space is acquired, the light transmittance of the switchable glass may be increased, so that the light intensity change perceived by the driver and passengers in the vehicle may be slower than the actual light intensity change, which helps to reduce or even avoid problems caused by a sudden change in light intensity.

Continuing to refer to FIG. 6B , in scenario 7, the vehicle exits an enclosed space such as a tunnel or a parking lot at night, and acquires a light intensity change information outside the enclosed space. For example, it is possible to detect the light intensity value of the vehicle outside the enclosed space by a light intensity detector, and then compare the actual light intensity value detected with the predetermined light intensity value. Upon comparison, it is determined that the actual light intensity value is greater than the predetermined light intensity value, that is, a light intensity rise is acquired. In scenario 7, it is possible to regulate the electrical signal applied to the switchable glass according to the light intensity change information (i.e., the light intensity rise), such as increasing the voltage applied to the switchable glass, so as to reduce the light transmittance of the switchable glass. That is, in scenario 7, when a light intensity rise inside the enclosed space is acquired, the light transmittance of the switchable glass may be reduced, so that the light intensity change perceived by the driver and passengers in the vehicle may be slower than the actual light intensity change, which helps to reduce or even avoid problems caused by a sudden change in light intensity.

Continuing to refer to FIG. 6B, in scenario 8, the vehicle exits an enclosed space such as a tunnel or a parking lot at night, and acquires a light intensity change information inside the enclosed space. For example, it is possible to detect the light intensity value of the vehicle inside the enclosed space by a light intensity detector, and then compare the actual light intensity value detected with the predetermined light intensity value. Upon comparison, it is determined that the actual light intensity value is less than the predetermined light intensity value, that is, a light intensity drop is acquired. In scenario 8, it is possible to regulate the electrical signal applied to the switchable glass according to the light intensity change information (i.e., the light intensity rise), such as reducing the voltage applied to the switchable glass, so as to increase the light transmittance of the switchable glass. That is, in scenario 8, when the light intensity drop inside the enclosed space is acquired, the light transmittance of the switchable glass may be increased, so that the light intensity change perceived by the driver and passengers in the vehicle may be slower than the actual light intensity change, which helps to reduce or even avoid problems caused by a sudden change in light intensity.

Based on various specific scenarios of embodiments of the present disclosure, in step S520, adjusting the light transmittance of the switchable glass by regulating the electrical signal applied to the switchable glass in response to the light intensity change information meeting the predetermined condition specifically includes: regulating the electrical signal applied to the switchable glass to reduce the light transmittance of the switchable glass in response to a light intensity rise information meeting the predetermined condition.

Alternatively or additionally, in step S520, adjusting the light transmittance of the switchable glass by regulating the electrical signal applied to the switchable glass in response to the light intensity change information meeting the predetermined condition specifically includes: regulating the electrical signal applied to the switchable glass to increase the light transmittance of the switchable glass in response to a light intensity drop information meeting the predetermined condition.

That is, in embodiments of the present disclosure, when the light intensity rise or the light intensity drop meets the predetermined condition, it is possible to slowly change the light transmittance of the switchable glass, so that the light intensity change perceived by the driver and passengers in the vehicle is slower than the actual light intensity change, which helps to reduce or even avoid problems caused by a sudden change in light intensity.

Alternatively or additionally, in step S520, adjusting the light transmittance of the switchable glass by regulating the electrical signal applied to the switchable glass in response to the light intensity change information meeting the predetermined condition specifically includes: regulating the electrical signal applied to the switchable glass to increase the light transmittance of the switchable glass in response to the light intensity rise information meeting the predetermined condition. For example, in scenario 1, it is possible to regulate the electrical signal applied to the switchable glass according to the light intensity change information (i.e., the light intensity rise), such as reducing the voltage applied to the switchable glass, so as to increase the light transmittance of the switchable glass. That is, in scenario 1, the light intensity rise inside the enclosed space is acquired, and the light transmittance of the switchable glass may be increased since scenario1 is a scenario of the vehicle entering an enclosed space, so that the light intensity perceived by the driver and passengers in the vehicle may be rapidly increased, and a rapid change of light intensity may be achieved.

In embodiments of the present disclosure, the light intensity change information includes not only a change in the light intensity value, but also a light intensity change rate. That is, in embodiments of the present disclosure, the light intensity change information meeting the predetermined condition may further include: the light intensity change rate being greater than a predetermined light intensity change rate threshold.

That is, in embodiments of the present disclosure, the predetermined condition may include at least one of: the absolute value of the difference between the actual light intensity value detected and the predetermined light intensity value, the absolute value of the difference between the actual light intensity values detected at two time instants, or the light intensity change rate. Accordingly, the light intensity change information meeting the predetermined condition may include at least one of: the absolute value of the difference between the actual light intensity value detected and the predetermined light intensity value being greater than the first predetermined light intensity difference threshold, the absolute value of the difference between the actual light intensity values detected at two time instants being greater than the second predetermined light intensity difference threshold, or the light intensity change rate being greater than the predetermined light intensity change rate threshold.

For example, in scenario 2, the vehicle has just entered an enclosed space such as a tunnel/parking lot, and the light intensity gradually drops at a particular change rate; in scenario 3, the vehicle has just exited an enclosed space such as a tunnel/parking lot, and the light intensity gradually rises at a particular change rate. For various different scenarios, a light intensity change rate threshold may be preset in the system, and the predetermined light intensity change rate threshold may be determined according to theoretical values and/or theoretical change rates of the light intensity in various scenarios.

In some exemplary embodiments of the present disclosure, in step S520, the electrical signal applied to the switchable glass may be regulated at one or more switching rates in response to the light intensity change information meeting the predetermined condition.

Specifically, a change rate k1 of the actual light intensity may be determined according to the actual light intensity detected by the light intensity detector; an electrical signal switching rate k2 corresponding to the change rate k1 of the actual light intensity may be determined based on the change rate k1 of the actual light intensity; then the electrical signal applied to the switchable glass may be regulated so that a switching rate of the electrical signal is regulated to the electrical signal switching rate k2; and based on the electrical signal switching rate k2, the light transmittance of the switchable glass also changes at a rate corresponding to the electrical signal switching rate k2.

That is, in embodiments of the present disclosure, the light intensity change rate, the electrical signal switching rate and the light transmittance of the switchable glass correspond to each other. It should be noted that "correspond to" here means that when the change rate k1 of the actual light intensity is small, that is, when the actual light intensity changes slowly, the electrical signal switching rate k2 may be small accordingly, that is, the electrical signal may be changed at a slow rate, and based on this, the light transmittance of the switchable glass also changes at a slow rate; when the change rate k1 of the actual light intensity is large, that is, when the actual light intensity changes rapidly, the electrical signal switching rate k2 may be large accordingly, that is, the electrical signal may be changed at a rapid rate, and based on this, the light transmittance of the switchable glass also changes at a rapid rate.

Specifically, in step S510, acquiring the light intensity change information includes acquiring a light intensity change rate. In step S520, regulating the electrical signal applied to the switchable glass includes: determining the switching rate of the electrical signal according to the light intensity change rate based on a mapping relationship between the switching rate of the electrical signal and the light intensity change rate; and regulating the switching rate of the electrical signal applied to the switchable glass based on the determined switching rate of the electrical signal.

It should be noted that in embodiments of the present disclosure, the light intensity change rate may be obtained by: detecting the light intensity in a continuous time period by a light intensity detector; forming a light intensity-time curve according to the light intensity detected in the continuous time period; deriving the light intensity-time curve with respect to time to obtain a light intensity change rate curve; and obtaining the light intensity change rates at different time instants according to the light intensity change rate curve.

It should also be noted that, in embodiments of the present disclosure, the mapping relationship between the switching rate of the electrical signal and the light intensity change rate is pre-established. For example, the mapping relationship between the switching rate of the electrical signal and the light intensity change rate may be established by pre-detecting the light intensity change information and the switching information of the electrical signal in each scenario.

In embodiments of the present disclosure, the predetermined second mapping relationship between the light intensity change information and the electrical signal regulation information further includes: a mapping relationship between the switching rate of the electrical signal and the light intensity change rate.

In some exemplary embodiments of the present disclosure, in step S520, regulating the electrical signal applied to the switchable glass includes: regulating the switching rate of the electrical signal applied to the switchable glass to a fixed switching rate.

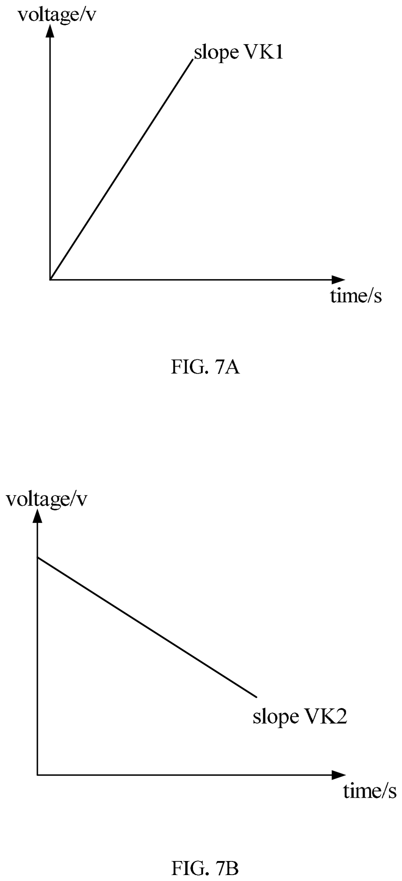

FIG. 7A and FIG. 7B show schematic diagrams of an electrical signal applied to the switchable glass changing over time. For example, the electrical signal may be a voltage signal. As shown in FIG. 7A and FIG. 7B, the electrical signal applied to the switchable glass changes over time at a fixed slope, and the fixed slope indicates that the switching rate of the electrical signal applied to the switchable glass is fixed.

Referring to FIG. 7A and FIG. 7B, in step S520, regulating the electrical signal applied to the switchable glass in response to the light intensity change information meeting the predetermined condition may specifically include: regulating the electrical signal applied to the switchable glass at a first fixed switching rate in response to the light intensity rise information meeting the predetermined condition; and regulating the electrical signal applied to the switchable glass at a second fixed switching rate in response to the light intensity drop information meeting the predetermined condition.

For example, when the vehicle exits an enclosed space such as a tunnel/parking lot during the day, in response to the light intensity drop information meeting the predetermined condition, the electrical signal applied to the switchable glass may be regulated at a first fixed switching rate VK1, that is, the switching rate of the electrical signal applied to the switchable glass is adjusted to the first fixed switching rate VK1. For example, the first fixed switching rate VK1 may be a slope of the voltage signal-time curve shown in FIG. 7A.

For another example, when the vehicle enters an enclosed space such as a tunnel/parking lot during the day, in response to the light intensity rise information meeting the predetermined condition, the electrical signal applied to the switchable glass may be regulated at a second fixed switching rate VK2, that is, the switching rate of the electrical signal applied to the switchable glass is adjusted to the second fixed switching rate VK2. For example, the second fixed switching rate VK2 may be a slope of the voltage signal-time curve shown in FIG. 7B.

As described above, the dark adaptation requires a longer time than the light adaptation. In some exemplary embodiments of the present disclosure, the second fixed switching rate VK2 is less than the first fixed switching rate VK1, so that a changing time for the dark adaptation is longer than that for the light adaptation, which may help the light adaptation and the dark adaptation of the user in different scenarios.

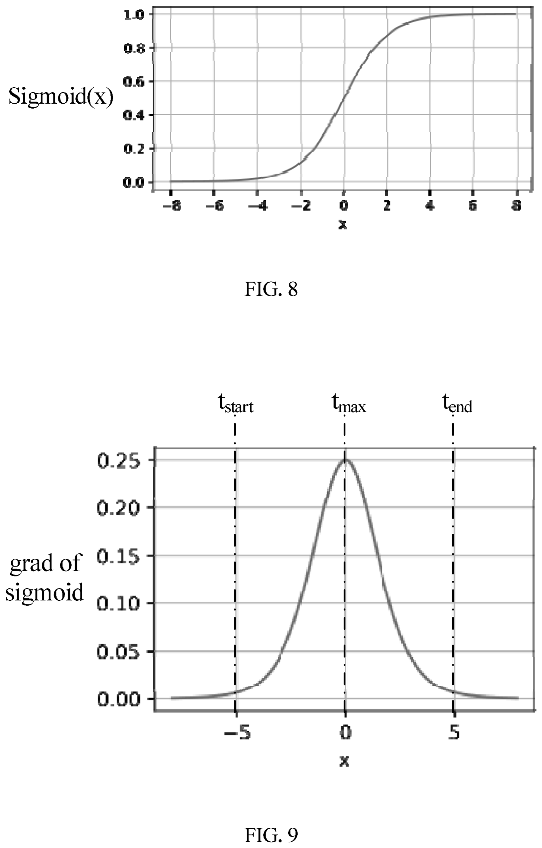

The inventors have found through research that the actual light intensity does not change linearly according to a fixed slope. FIG. 8 schematically shows an actual light intensity-time curve. For example, FIG. 8 may correspond to scenario 1 and scenario 3 described above, that is, the light intensity-time curve in the light intensity rise process.

As shown in FIG. 8, in a scenario of the light intensity rise, a change curve of the actual light intensity is an S-shaped growth curve, such as a sigmoid curve. Specifically, the light intensity received by the light intensity detector changes from "dark" to "bright", and eventually the light intensity gradually tends to be stable.

FIG. 9 shows a curve obtained by derivation of the light intensity-time curve shown in FIG. 8, that is, FIG. 9 schematically shows a light intensity change rate-time curve. Referring to FIG. 8 and FIG. 9, in a continuous time period in which the light intensity changes, the light intensity change rate may change over time. For example, the continuous time period may include a start time instant tₛₜₐᵣₜ and an end time instant t_{end}, and the light intensity change rate between the start time instant tₛₜₐᵣₜ and the end time instant t_{end} is greater than a predetermined light intensity change rate. For example, as shown in FIG. 9, the predetermined light intensity change rate may be 0 or substantially 0, that is, the light intensity change rate between the start time instant tₛₜₐᵣₜ and the end time instant t_{end} is greater than 0.

Continuing to refer to FIG. 9, a maximum light intensity change rate time instant tₘₐₓ is between the start time instant tₛₜₐᵣₜ and the end time instant t_{end}. The light intensity change rate at the maximum light intensity change rate time instant tₘₐₓ is the maximum light intensity change rate in the continuous time period.

In some exemplary embodiments of the present disclosure, it is possible to set a start regulation time instant of regulating the electrical signal applied to the switchable glass.

For example, the start regulation time instant of regulating the electrical signal applied to the switchable glass may be set as the start time instant tₛₜₐᵣₜ. In such embodiments, when the light intensity begins to rise, the electrical signal is regulated immediately, so that the light transmittance of the switchable glass may be adjusted immediately. In this case, the transparency of the glass is adjusted in advance, so that an adjustment lag caused by factors such as insufficient sensitivity of the light intensity detector may be reduced or eliminated.

For example, the start regulation time instant of regulating the electrical signal applied to the switchable glass may be set as the maximum light intensity change rate time instant tₘₐₓ. In such embodiments, the electrical signal is regulated when the light intensity changes most drastically, that is, the transparency of the glass is adjusted when the light intensity changes most drastically, which helps to adjust the transparency of the glass well with the change in the actual light intensity.

For example, the start regulation time instant of regulating the electrical signal applied to the switchable glass may be set as the end time instant t_{end}. In such embodiments, the electrical signal is regulated when the light intensity change tends to be stable. In this way, it is possible to reduce or eliminate an adjustment oscillation caused by factors such as insufficient sensitivity of the light intensity detector.

That is, in embodiments of the present disclosure, the start regulation time instant of regulating the electrical signal applied to the switchable glass may be one of the start time instant, the maximum light intensity change rate time instant, or the end time instant.

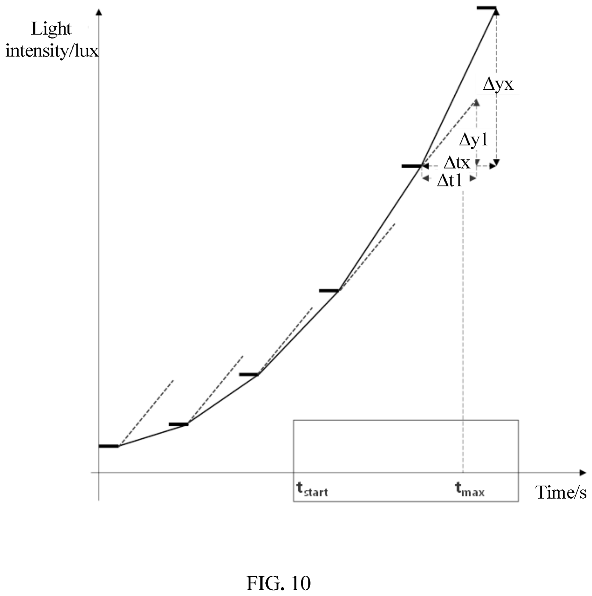

FIG. 10 shows a comparison between an actual light intensity change rate and a predetermined light intensity change rate threshold in a light intensity-time curve. Referring to FIG. 8 to FIG. 10, in the continuous time period, the light intensity change rate may change over time. In some exemplary embodiments, a predetermined light intensity change rate threshold L₁ may be a fixed value. As shown in FIG. 10, a slope of a dotted line represents the predetermined light intensity change rate threshold L₁, which may be a fixed value. For example, L₁==Δy₁/Δt₁, where Δt₁ represents a unit time, and Δy₁ represents a predetermined light intensity variation in the unit time.

As shown in FIG. 10, a solid line represents a curve of an actual light intensity Lx changing over time, and a slope of the solid line varies at each point of the curve, which indicates that the actual light intensity change rate may change over time in the continuous time period. For example, Lₓ==Δyₓ/Δtₓ, where Δtₓ represents a unit time, and Δyₓ represents an actual light intensity variation in the unit time.

In some exemplary embodiments, when the actual light intensity change rate L_{X} is greater than the predetermined light intensity change rate threshold L₁, the electrical signal may be regulated at a fixed switching rate. Referring back to FIG. 7A, an actual voltage V=VK1*t+V0, where VK1 represents a slope of the curve shown in FIG. 7A, and V0 is a predetermined constant. The regulated voltage signal may be determined through the above equation.

In such embodiments, the switching rate of the electrical signal is fixed, that is, the electrical signal-time curve has a fixed slope, which helps the control and regulation of the electrical signal and may achieve an "uniform" adjustment of transmittance.

In some exemplary embodiments of the present disclosure, corresponding to the light intensity change rate, in step S520, regulating the electrical signal applied to the switchable glass may include: regulating the electrical signal applied to the switchable glass at a variable switching rate.

Specifically, in step S520, regulating the electrical signal applied to the switchable glass includes: determining the switching rate of the electrical signal according to the light intensity change rate based on a mapping relationship between the switching rate of the electrical signal and the light intensity change rate; and regulating the switching rate of the electrical signal applied to the switchable glass based on the determined switching rate of the electrical signal. For example, in embodiments shown in FIG. 8 to FIG. 10, in the continuous time period, the light intensity change rate may change over time. In such embodiments, the switching rate of the electrical signal may be regulated in real time according to the mapping relationship between the switching rate of the electrical signal and the light intensity change rate. That is, the slope of the electrical signal-time curve is not fixed, but changes according to a change in the light intensity change rate.

For example, the actual voltage V=VKx*t+V0, where VKx represents a switching rate of the electrical signal determined according to the light intensity change rate based on the mapping relationship between the switching rate of the electrical signal and the light intensity change rate, which changes over time; and V0 is a predetermined constant. The regulated voltage signal may be determined through the above equation.

In such embodiments, the switching rate of the electrical signal is variable, that is, the switching rate of the electrical signal changes with the change in the light intensity change rate, which helps achieve a real-time change in the transparency of the switchable glass with the change in the light intensity change rate, and achieve a "gradient" adjustment of transmittance.

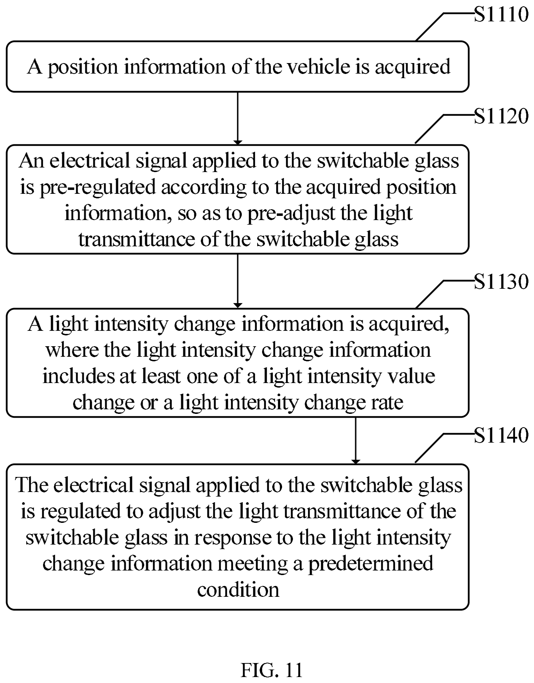

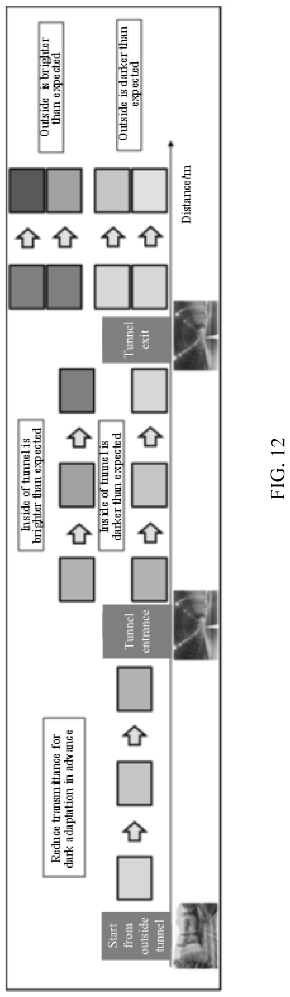

FIG. 11 shows a flowchart of a method of controlling a switchable glass system according to other exemplary embodiments of the present disclosure. FIG. 12 shows a specific application diagram of a control method according to some exemplary embodiments of the present disclosure. The control method includes steps S1110 to S1120.

In step S1110, a position information of the vehicle is acquired. For example, the position information of the vehicle may be acquired by means of a position sensor of the vehicle.

In step S1120, an electrical signal applied to the switchable glass is pre-regulated according to the acquired position information, so as to pre-adjust the light transmittance of the switchable glass.

In embodiments of the present disclosure, the light transmittance of the switchable glass may be pre-adjusted as follows. For example, in response to a vehicle position change information meeting a predetermined position condition, a transmittance adjustment information is determined according to a predetermined third mapping relationship between the vehicle position change information and the light transmittance adjustment information, where the transmittance adjustment information corresponds to the vehicle position change information meeting the position condition in the third mapping relationship.

In an example, the third mapping relationship may include a predetermined mapping relationship table between the vehicle position change information and the light transmittance adjustment information, as shown in Table 4 below. Table 4 includes fields such as serial number, vehicle position change information, transmittance adjustment information (including adjusting a magnitude of transmittance and adjusting a change rate of transmittance).

It should be noted that Table 4 exemplarily shows four predetermined mapping relationships between the vehicle position change information and the light transmittance adjustment information. The four mapping relationships listed in Table 4 are merely exemplary descriptions, and embodiments of the present disclosure may further include other mapping relationships.

It should also be noted that in Table 4, the mapping relationship table between the vehicle position change information and the transmittance adjustment information is illustrated by taking entering and exiting a tunnel as an example, which is merely exemplary. It should be understood that the mapping relationship table between the vehicle position change information and the transmittance adjustment information may further include scenarios of entering and exiting other types of enclosed spaces.

**Table 4**

| Mapping Relationship Between Vehicle Position Change Information And Light Transmittance Adjustment Information | | | |
|---|---|---|---|
| Serial number | Vehicle position change information | Electrical signal regulation information | |
| | | Adjusting amplitude of electrical signal | Regulating switching rate of electrical signal |
| 1 | Being located outside tunnel and approaching tunnel entrance | Reduce | Rapid |
| 2 | Being located outside tunnel and approaching tunnel entrance | Reduce | Slow |
| 3 | Being located inside tunnel and approaching tunnel exit | Increase | Rapid |
| 4 | Being located inside tunnel and approaching tunnel exit | Increase | Slow |

In mapping relationship 1 or 2 of Table 4, when the vehicle is located outside the tunnel and a distance from the vehicle to the tunnel entrance is less than or equal to a first specified distance (i.e., the vehicle is approaching the tunnel entrance), it is possible to pre-adjust the light transmittance of the switchable glass, such as reducing the light transmittance of the switchable glass at a slow(small) change rate. In this way, the light intensity in the vehicle may be slowly reduced before the vehicle enters the tunnel, so that the driver and passengers in the vehicle may adapt in advance to the weakening of light intensity caused by entering the tunnel. Alternatively, the light transmittance of the switchable glass may be reduced at a rapid(large) change rate to accommodate user's personal preferences or characteristics.

In mapping relationship 3 or 4 of Table 4, when the vehicle is located inside the tunnel and a distance from the vehicle to the tunnel exit is less than or equal to a second specified distance (i.e., the vehicle is approaching the tunnel exit), it is possible to pre-adjust the light transmittance of the switchable glass, such as increasing the light transmittance of the switchable glass at a slow change rate. In this way, the light intensity in the vehicle may be slowly increased before the vehicle exits the tunnel, so that the driver and passengers in the vehicle may adapt in advance to a sudden increase of the light intensity caused by exiting the tunnel. Alternatively, the light transmittance of the switchable glass may be increased at a rapid change rate to accommodate user's personal preferences or characteristics.

Referring to FIG. 11, the control method is specifically described by taking the above scenario 1 or scenario 2 as an example, that is, with the scenario of the vehicle entering an enclosed space such as a parking lot/tunnel as an example.

In step S1110, a position information of the vehicle is acquired by means of a position sensor, such as a GPS position sensor, a Beidou position sensor, etc. of the vehicle, so as to determine a distance information S between a current position of the vehicle and an entrance of the tunnel/parking lot.

In step S1120, a time length t from the current position of the vehicle to the entrance of the tunnel/parking lot is calculated according to the distance information S and a speed information. For example, the speed information may include: a current speed of the vehicle, a maximum speed limit of a current road, or a greater one of the current speed of the vehicle and the maximum speed limit of the current road.

Furthermore, in step S1120, it is possible to acquire a voltage V1 of the switchable glass currently in a dark state, and calculate a suitable actual voltage switching rate V1 (corresponding to a fixed switching rate) or Vx (corresponding to a variable switching rate) according to the calculated time length t. A voltage signal applied to the switchable glass may be regulated according to the actual voltage switching rate V1 or Vx, so as to change the transparency of the switchable glass.

In such embodiments, it is possible to pre-adjust the light transmittance of the switchable glass by acquiring the position information, so that the driver and passengers in the vehicle may adapt in advance to an upcoming change in light intensity.

Referring to FIG. 12, when the vehicle is located outside the tunnel and a distance from the vehicle to the tunnel entrance is less than or equal to the first specified distance, it is possible to pre-adjust the light transmittance of the switchable glass, such as reducing the light transmittance of the switchable glass at a slow change rate. In this way, the light intensity in the vehicle may be slowly reduced before the vehicle enters the tunnel, so that the driver and passengers in the vehicle may adapt in advance to the weakening of light intensity caused by entering the tunnel.

In embodiments of the present disclosure, the method may also be combined with the embodiments shown in FIG. 5. Continuing to refer to FIG. 11, the control method may further include steps S1130 to S1140. Step S1130 may correspond to step S510 described above, and step S1140 may correspond to step S540 described above.

In step S1130, a light intensity change information is acquired. The light intensity change information includes at least one of a light intensity value change or a light intensity change rate.

In step S1140, the electrical signal applied to the switchable glass is regulated to adjust the light transmittance of the switchable glass in response to the light intensity change information meeting a predetermined condition.

Referring to FIG. 12, in a process of the vehicle entering the tunnel through the tunnel entrance, the tunnel may be brighter than expected or darker than expected. For these two cases, the light transmittance of the switchable glass may be adjusted using the above method. For example, if the tunnel is brighter than expected, the light transmittance of the switchable glass may be reduced at a slow change rate; if the tunnel is darker than expected, the light transmittance of the switchable glass may be increased at a slow change rate.

Continuing to refer to FIG. 12, in a process of the vehicle exiting the tunnel through the tunnel exit, the outside may be brighter than expected or darker than expected. For these two cases, the light transmittance of the switchable glass may be adjusted using the above method. For example, if the outside is brighter than expected, the light transmittance of the switchable glass may be reduced at a slow change rate; if the outside is darker than expected, the light transmittance of the switchable glass may be increased at a slow change rate.

It should be noted that, as shown in FIG. 12, the pre-adjustment outside the tunnel entrance, the adjustment inside the tunnel and the adjustment outside the tunnel exit may be a continuous adjustment process. After the pre-adjustment outside the tunnel entrance is performed, in a process of the vehicle entering the tunnel through the tunnel entrance, the tunnel may be brighter than expected or darker than expected, in this way, one adjustment solution may be changed to two adjustment solutions. Then, in a process of the vehicle exiting the tunnel through the tunnel exit, the outside may be brighter than expected or darker than expected, in this way, the two adjustment solutions may be changed to four adjustment solutions. That is, in embodiments of the present disclosure, the light transmittance adjustment solutions for various cases may be combined in a case of no conflicts.

It should be noted that, in step S1120, the electrical signal applied to the switchable glass may be regulated at a fixed switching rate or a variable switching rate.

In some exemplary embodiments, in step S1120, pre-regulating the electrical signal applied to the switchable glass according to the acquired position information specifically includes: pre-regulating the electrical signal applied to the switchable glass at a fixed switching rate in a process of the vehicle passing through an entrance or an exit of the enclosed space.

In other exemplary embodiments, in step S1120, pre-regulating the electrical signal applied to the switchable glass according to the acquired position information specifically includes: pre-regulating the electrical signal applied to the switchable glass at a variable switching rate in a process of the vehicle passing through an entrance or an exit of the enclosed space, where the variable switching rate is determined based on a speed of the vehicle.

In some exemplary embodiments, in step S1120, regulating the electrical signal applied to the switchable glass includes: regulating a switching rate of the electrical signal applied to the switchable glass according to the acquired position information.

Specifically, in step S1120, regulating the switching rate of the electrical signal applied to the switchable glass according to the acquired position information specifically includes: regulating the switching rate of the electrical signal to a first switching rate in the process of the vehicle passing through the entrance of the enclosed space, where the first switching rate is greater than a predetermined switching rate. For example, in a process of the vehicle entering an enclosed space such as a tunnel/parking lot, the electrical signal may be regulated at a rapid(large) switching rate so that the transparency of the switchable glass changes at a rapid rate, that is, the transparency of the switchable glass may change rapidly, for example, to a high transmittance, which helps the driver to be alert to the surrounding environment.

Specifically, in step S1120, regulating the switching rate of the electrical signal applied to the switchable glass according to the acquired position information specifically includes: regulating the switching rate of the electrical signal to a second switching rate in a process of the vehicle passing through the exit of the enclosed space, where the second switching rate is less than the predetermined switching rate. For example, in a process of the vehicle exiting an enclosed space such as a tunnel/parking lot, the electrical signal may be regulated at a slow(small) switching rate, so that the transparency of the switchable glass changes at a slow rate, that is, the transparency of the switchable glass may change slowly, for example, to a low transmittance, which helps the driver to gradually adapt to the surrounding environment.

Specifically, in step S1120, regulating the switching rate of the electrical signal applied to the switchable glass according to the acquired position information specifically includes: regulating the switching rate of the electrical signal to a third switching rate in a process of the vehicle being located in a first environment and a user of the vehicle leaving the vehicle, where the third switching rate is less than a predetermined switching rate, and the first environment is an environment familiar to the user of the vehicle. For example, in a scenario where the driver has parked the vehicle in a parking lot of a residential area or company and the driver and passengers in the vehicle are about to leave the vehicle, the electrical signal may be regulated at a slow switching rate, so that the transparency of the switchable glass changes at a slow rate, that is, the transparency of the switchable glass may change slowly, for example, to a low transmittance, which helps the driver and passengers in the vehicle to say goodbye or look for lost items in the vehicle.

Specifically, in step S1120, regulating the switching rate of the electrical signal applied to the switchable glass according to the acquired position information specifically includes: regulating the switching rate of the electrical signal to a fourth switching rate in a process of the vehicle being located in a second environment and the user of the vehicle leaving the vehicle, where the fourth switching rate is greater than the predetermined switching rate, and the second environment is an environment unfamiliar to the user of the vehicle. For example, in a scenario where the driver has parked the vehicle in a parking lot of an unfamiliar environment such as a roadside or supermarket and the driver and passengers in the vehicle are about to leave the vehicle, the electrical signal may be regulated at a rapid switching rate, so that the transparency of the switchable glass changes at a rapid rate, that is, the transparency of the switchable glass may change rapidly, for example, to a low transmittance, which may help to protect privacy of occupants in the vehicle.

In an example, in step S520 and step S1130 described above, regulating the electrical signal applied to the switchable glass may include: regulating the switching rate of the electrical signal applied to the switchable glass according to a speed of the vehicle in a travelling process of the vehicle, where the switching rate of the electrical signal is inversely proportional to the speed of the vehicle.

For example, in a scenario where the vehicle is travelling at a high speed, the high speed travelling may result in a rapid change of scenes, which may cause a sudden change in light intensity. In such scenario, it is possible to appropriately reduce the switching rate of the electrical signal applied to the switchable glass, so that the light transmittance of the switchable glass changes at a relatively slow rate, which may avoid driving safety issues caused by a sudden change in light intensity.

For another example, in a scenario where the vehicle is travelling at a low speed, the low speed travelling results in a slow change of scenes. In such scenario, it is possible to appropriately increase the switching rate of the electrical signal applied to the switchable glass, so that the light transmittance of the switchable glass changes at a relatively rapid rate, which may help the driver to achieve a goal quickly.

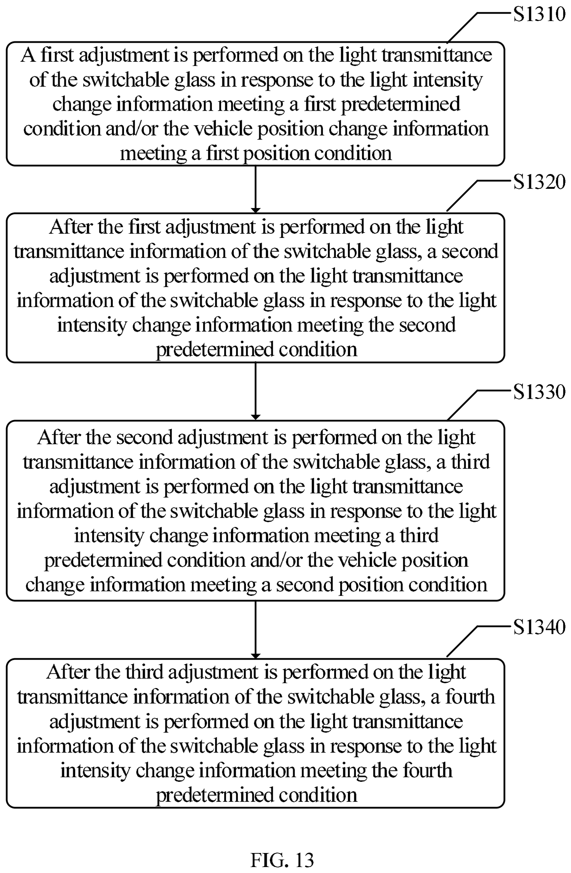

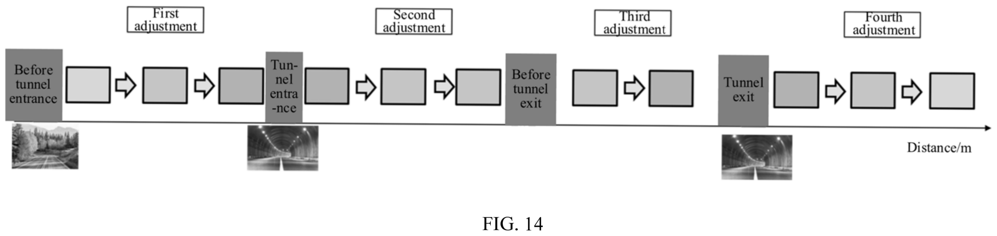

FIG. 13 shows a flowchart of a method of controlling a switchable glass system according to still other exemplary embodiments of the present disclosure. FIG. 14 shows a specific application diagram of a control method according to still other exemplary embodiments of the present disclosure. The control method includes steps S1310 to S1340. It should be noted that in a case of no conflicts, the control method in such embodiments may include the steps and adjustment solutions in various embodiments described above.

In step S1310, a first adjustment is performed on the light transmittance of the switchable glass in response to the light intensity change information meeting a first predetermined condition and/or the vehicle position change information meeting a first position condition. The first adjustment includes adjusting the light transmittance of the switchable glass based on a first transmittance adjustment information.

For example, performing the first adjustment on the light transmittance of the switchable glass includes: performing the first adjustment on the light transmittance of the switchable glass by performing a first regulation on the electrical signal applied to the switchable glass. The first regulation includes regulating the electrical signal based on a first electrical signal regulation information.

Referring to FIG. 14, in a case that the vehicle is located outside the tunnel and a distance from the vehicle to the tunnel entrance is less than or equal to the first specified distance, and/or in a case that the light intensity change information meets a condition of the vehicle being located outside the tunnel and about to enter the tunnel, it is possible to perform a pre-adjustment, i.e., the first adjustment, on the light transmittance of the switchable glass. For example, the light transmittance of the switchable glass may be reduced at a slow change rate. In this way, the light intensity in the vehicle may be slowly reduced before the vehicle enters the tunnel, so that the driver and passengers in the vehicle may adapt in advance to the weakening of light intensity caused by entering the tunnel.

In step S1310, the first transmittance adjustment information is determined according to the predetermined first mapping relationship between the light intensity change information and the light transmittance adjustment information in response to the light intensity change information meeting the first predetermined condition. The first transmittance adjustment information corresponds to the light intensity change information meeting the first predetermined condition in the first mapping relationship.

In step S1310, the first electrical signal regulation information is determined according to the predetermined second mapping relationship between the light intensity change information and the electrical signal regulation information in response to the light intensity change information meeting the first predetermined condition. The first electrical signal regulation information corresponds to the light intensity change information meeting the first predetermined condition in the second mapping relationship.

In step S1310, the first transmittance adjustment information is determined according to the predetermined third mapping relationship between the vehicle position change information and the light transmittance adjustment information in response to the vehicle position change information meeting the first position condition. The first transmittance adjustment information corresponds to the vehicle position change information meeting the first position condition in the third mapping relationship.

In step S1320, after the first adjustment is performed on the light transmittance information of the switchable glass, a second adjustment is performed on the light transmittance information of the switchable glass in response to the light intensity change information meeting the second predetermined condition. The second adjustment includes adjusting the light transmittance of the switchable glass based on the second transmittance adjustment information.

For example, in this step, the second adjustment may include: determining the transmittance adjustment information according to the predetermined first mapping relationship between the light intensity change information and the light transmittance adjustment information in response to the light intensity change information meeting the predetermined condition. The determined transmittance adjustment information corresponds to the light intensity change information meeting the predetermined condition in the first mapping relationship; and then the light transmittance of the switchable glass is adjusted based on the transmittance adjustment information. For example, the transmittance adjustment information may be determined according to the mapping relationship table shown in Table 1 or Table 2.

For example, performing the second adjustment on the light transmittance of the switchable glass includes: performing the second adjustment on the light transmittance of the switchable glass by performing a second regulation on the electrical signal applied to the switchable glass. The second regulation includes regulating the electrical signal based on a second electrical signal regulation information.

Continuing to refer to FIG. 14, in a process of the vehicle entering a tunnel through a tunnel entrance, the tunnel may be darker than expected. In this case, the light transmittance of the switchable glass may be adjusted using the above methods. For example, if the tunnel is darker than expected, the light transmittance of the switchable glass may be increased at a slow change rate.

In step S1320, the second transmittance adjustment information is determined according to the predetermined first mapping relationship between the light intensity change information and the light transmittance adjustment information in response to the light intensity change information meeting the second predetermined condition. The second transmittance adjustment information corresponds to the light intensity change information meeting the second predetermined condition in the first mapping relationship.

In step S1320, the second electrical signal regulation information is determined according to the predetermined second mapping relationship between the light intensity change information and the electrical signal regulation information in response to the light intensity change information meeting the second predetermined condition. The second electrical signal regulation information corresponds to the light intensity change information meeting the second predetermined condition in the second mapping relationship.

In step S1330, after the second adjustment is performed on the light transmittance information of the switchable glass, a third adjustment is performed on the light transmittance information of the switchable glass in response to the light intensity change information meeting a third predetermined condition and/or the vehicle position change information meeting a second position condition. The third adjustment includes adjusting the light transmittance of the switchable glass based on the third transmittance adjustment information.

For example, performing the third adjustment on the light transmittance of the switchable glass includes: performing the third adjustment on the light transmittance of the switchable glass by performing a third regulation on the electrical signal applied to the switchable glass. The third regulation includes regulating the electrical signal based on the third electrical signal regulation information.

Continuing to refer to FIG. 14, in a case that the vehicle is located in a tunnel and a distance from the vehicle to the tunnel exit is less than or equal to the second specified distance, and/or in a case that the light intensity change information meets a condition of the vehicle being located in the tunnel and about to exit the tunnel, it is possible to perform a pre-adjustment, i.e., the third adjustment, on the light transmittance of the switchable glass. For example, the light transmittance of the switchable glass may be reduced at a slow change rate. In this way, the light intensity in the vehicle may be slowly reduced before the vehicle exits the tunnel, so that the driver and passengers in the vehicle may adapt in advance to a sudden increase in light intensity caused by exiting the tunnel.

In step S1330, the third transmittance adjustment information is determined according to the predetermined first mapping relationship between the light intensity change information and the light transmittance adjustment information in response to the light intensity change information meeting the third predetermined condition. The third transmittance adjustment information corresponds to the light intensity change information meeting the third predetermined condition in the first mapping relationship.

In step S1330, the third electrical signal regulation information is determined according to the predetermined second mapping relationship between the light intensity change information and the electrical signal regulation information in response to the light intensity change information meeting the third predetermined condition. The third electrical signal regulation information corresponds to the light intensity change information meeting the third predetermined condition in the second mapping relationship.

In step S1330, the third transmittance adjustment information is determined according to the predetermined third mapping relationship between the vehicle position change information and the light transmittance adjustment information in response to the vehicle position change information meeting the second position condition. The third transmittance adjustment information corresponds to the vehicle position change information meeting the second position condition in the third mapping relationship.

In step S1340, after the third adjustment is performed on the light transmittance information of the switchable glass, a fourth adjustment is performed on the light transmittance information of the switchable glass in response to the light intensity change information meeting the fourth predetermined condition. The fourth adjustment includes adjusting the light transmittance of the switchable glass based on the fourth transmittance adjustment information.

For example, in this step, the fourth adjustment may include: determining the transmittance adjustment information according to the predetermined first mapping relationship between the light intensity change information and the light transmittance adjustment information in response to the light intensity change information meeting the predetermined condition. The determined transmittance adjustment information corresponds to the light intensity change information meeting the predetermined condition in the first mapping relationship; and then the light transmittance of the switchable glass is adjusted based on the transmittance adjustment information. For example, the transmittance adjustment information may be determined according to the mapping relationship table shown in Table 1 or Table 2.

For example, performing the fourth adjustment on the light transmittance of the switchable glass includes: performing the fourth adjustment on the light transmittance of the switchable glass by performing a fourth regulation on the electrical signal applied to the switchable glass. The fourth regulation includes regulating the electrical signal based on the fourth electrical signal regulation information.

Continuing to refer to FIG. 14, in a process of the vehicle exiting the tunnel through the tunnel exit, the outside may be darker than expected. In this case, the light transmittance of the switchable glass may be adjusted using the above methods. For example, if the outside is darker than expected, the light transmittance of the switchable glass may be increased at a slow change rate.

In step S1340, the fourth transmittance adjustment information is determined according to the predetermined first mapping relationship between the light intensity change information and the light transmittance adjustment information in response to the light intensity change information meeting the fourth predetermined condition. The fourth transmittance adjustment information corresponds to the light intensity change information meeting the fourth predetermined condition in the first mapping relationship.

In step S1340, the fourth electrical signal regulation information is determined according to the predetermined second mapping relationship between the light intensity change information and the electrical signal regulation information in response to the light intensity change information meeting the fourth predetermined condition. The fourth electrical signal regulation information corresponds to the light intensity change information meeting the fourth predetermined condition in the second mapping relationship.

It should be understood that in embodiments of the present disclosure, it is possible to acquire at least one of the light intensity change information or the vehicle position change information in real time in a travelling process of the vehicle.

In embodiments of the present disclosure, each of the first transmittance adjustment information, the second transmittance adjustment information, the third transmittance adjustment information and the fourth transmittance adjustment information includes adjusting at least one of a magnitude of the light transmittance of the switchable glass or a change rate of the light transmittance of the switchable glass.

In embodiments of the present disclosure, each of the first electrical signal regulation information, the second electrical signal regulation information, the third electrical signal regulation information and the fourth electrical signal regulation information includes adjusting at least one of an amplitude of the electrical signal applied to the switchable glass or a switching rate of the electrical signal applied to the switchable glass.

In embodiments of the present disclosure, referring to FIG. 14, entering or exiting an enclosed space is regarded as a continuous scenario, the transmittance may be pre-adjusted in advance according to the vehicle position change information, which belongs to "coarse adjustment"; while the adjustment performed when entering or exiting the enclosed space belongs to "fine adjustment", and these belong to a continuous process. Two consecutive adjustments performed when entering and exiting the enclosed space may form a closed loop in the entire adjustment process, which is more in line with the physiological process of human body and in line with the adaptation of the driver and passengers when the vehicle enters an enclosed space, thereby avoiding traffic accidents and improving safety.

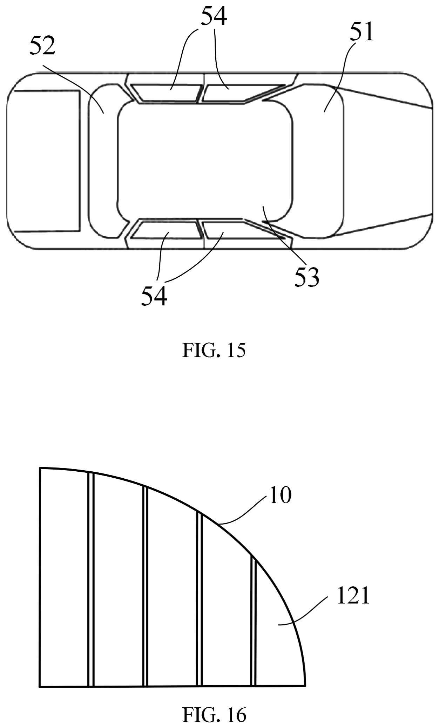

FIG. 15 shows a schematic diagram of a switchable glass system applied to a vehicle according to an embodiment of the present disclosure, where a top view of the vehicle is shown in FIG. 15. As shown in FIG. 15, the switchable glass in the switchable glass system may include at least one selected from a group consisting of a front windshield glass 51, a rear windshield glass 52, a sunroof glass 53, a sun visor, and all side windshield glasses 54 of the vehicle. That is, at least one selected from the group consisiting of the front windshield glass, the rear windshield glass, the sunroof glass, the sun visor, and all the side windshield glasses of the vehicle may be the switchable glass in the switchable glass system according to embodiments of the present disclosure. Accordingly, the method of controlling the switchable glass system according to embodiments of the present disclosure may be applied to the switchable glass.

Referring to FIG. 1, FIG. 2, FIG. 4 and FIG. 15, the switchable glass system 100 may include a switchable glass 10, a controller 4, a light intensity detector 6 and a position sensor 7. The switchable glass may be implemented based on one or more embodiments of FIG. 1 to FIG. 2 and installed on the vehicle. The controller 4 is electrically connected to the first electrode 12 and the second electrode 22 of the switchable glass 10. For example, the controller 4 may be further electrically connected to an in-vehicle infotainment system 5 of the vehicle.

The light intensity detector 6 is used to detect a light intensity of an environment where it is located. In embodiments of the present disclosure, there is no special restriction on the type and installation position of the light intensity detector 6. The light intensity detector 6 may be of any suitable type and installed at any suitable position.

The position sensor 7 is used to detect a position of the vehicle. In embodiments of the present disclosure, there is no particular limitation on the type and installation position of the position sensor 7. The position sensor 7 may be of any suitable type and installed at any suitable position.

In embodiments of the present disclosure, the light intensity detector 6 and the position sensor 7 may be directly connected to the controller 4, that is, the information acquired by the light intensity detector 6 and the position sensor 7 may be directly input to the controller 4. Alternatively, the light intensity detector 6 and the position sensor 7 may be connected to the in-vehicle infotainment system 5, that is, the information acquired by the light intensity detector 6 and the position sensor 7 may be directly input to the in-vehicle infotainment system 5, and then the in-vehicle infotainment system 5 may input the information to the controller 4.

In embodiments of the present disclosure, regulating the electrical signal applied to the switchable glass so as to adjust the light transmittance of the switchable glass includes: regulating the electrical signal applied to at least one selected from the group consisiting of the front windshield glass, the rear windshield glass, the sunroof glass, the sun visor and all the side windshield glasses of the vehicle, so as to adjust the light transmittance of the at least one selected from the group consisiting of the front windshield glass, the rear windshield glass, the sunroof glass, the sun visor and all the side windshield glasses of the vehicle. For example, it is possible to simultaneously adjust the electrical signals applied to the front windshield glass, the rear windshield glass, the sunroof glass, the sun visor and all the side windshield glasses of the vehicle, so as to adjust the light transmittances of the front windshield glass, the rear windshield glass, the sunroof glass, the sun visor and all the side windshield glasses of the vehicle.

Referring back to FIG. 1 and FIG. 2, in some embodiments of the present disclosure, the switchable assembly 3 is configured so that a state of the switchable assembly 3 changes to cause the switchable glass 10 to have a plurality of partitions in response to an electrical signal applied to at least one of the first electrode 12 or the second electrode 22.

In an example, the electrical signal may be a voltage signal. The voltage signal includes a predetermined driving voltage applied. During an operation of the switchable glass 10, an electrical signal may be transmitted to the first electrode 12 and/or the second electrode 22 to control a deflection state of the liquid crystal molecules in the liquid crystal layer 31, thereby controlling the light transmittance of the switchable glass 10.

FIG. 16 shows a schematic structural diagram of a switchable glass in a switchable glass system according to an embodiment of the present disclosure. Referring to FIG. 16, in the switchable glass 10 in such embodiments, the first electrode 12 includes a plurality of first sub-electrodes 121, which support one or more partitions in a vertical direction on the paper, and an area of each partition and the number of partitions are adjustable. An adjustable level is determined by the number of first sub-electrodes 121, such as at least two independently controllable first sub-electrodes 121. The greater the number of the first sub-electrodes 121, the more delicate the control of the partition dynamic switching. In addition, the light transmittance of each partition may be fixed, or a level adjustment or stepless adjustment may be supported.

For example, an electrical signal may be applied to the first electrode 12 and/or the second electrode 22 by the driving circuit through a wire. For the sub-electrodes 121 in the first electrode 12, the electrical signal transmitted by a wire may be the same as or different from that transmitted by at least one other wire. In the switchable glass 10 provided in embodiments of the present disclosure, the driving circuit may provide the electrical signal to one or more of the plurality of sub-electrodes, and provide the electrical signal to the second electrode 22, so as to generate an electric field between one or more sub-electrodes and the second electrode 22, thereby changing the light transmittances of the regions respectively corresponding to one or more sub-electrodes.

In this way, it is possible to achieve various dimming effects. For example, the light transmittance may be adjusted separately for each sub-electrode region. Accordingly, when it is required to specifically adjust the light transmittance of a particular region of the switchable glass 10, an electrical signal may be applied to the sub-electrode in that region and the second electrode 22 so that, for example, the driving voltage of the sub-electrode in that region is different from that of other sub-electrodes, and a corresponding electric field is generated in a region corresponding to that sub-electrode and the second electrode 22, thereby achieving an independent control of the light transmittance of that region.

In embodiments of the present disclosure, in step S520 and step S1130 described above, regulating the electrical signal applied to the switchable glass includes: regulating, for different regions of the same switchable glass, switching rates of electrical signals respectively applied to different regions of the switchable glass by region.

For example, the switchable glass includes a side windshield glass on a driver side of the vehicle. In this case, the regulating, for different regions of the same switchable glass, switching rates of electrical signals respectively applied to different regions of the switchable glass by region specifically includes: regulating, for the side windshield glass, the switching rates of the electrical signals respectively applied to different regions of the side windshield glass by region, so that the switching rate of a partial region on a front side of the side windshield glass is less than the switching rate of a partial region on a rear side of the side windshield glass. In this way, it is possible to avoid driving safety issues caused by a sudden change in light intensity.

For example, the switchable glass includes a sunroof glass on a top side of the vehicle. In this case, the regulating, for different regions of the same switchable glass, switching rates of electrical signals respectively applied to different regions of the switchable glass by region specifically includes: regulating, for the sunroof glass, the switching rates of the electrical signals respectively applied to different regions of the sunroof glass by region, so that the switching rate of a partial region of the sunroof glass is different from the switching rate of another partial region of the sunroof glass. In an example, the switching rate of each partition may be independently selected by the user, and it is possible to achieve fly-in, chessboard, folding and other present effects of the sunroof glass. In this way, the immersion and experience of the sunroof glass may be enhanced.

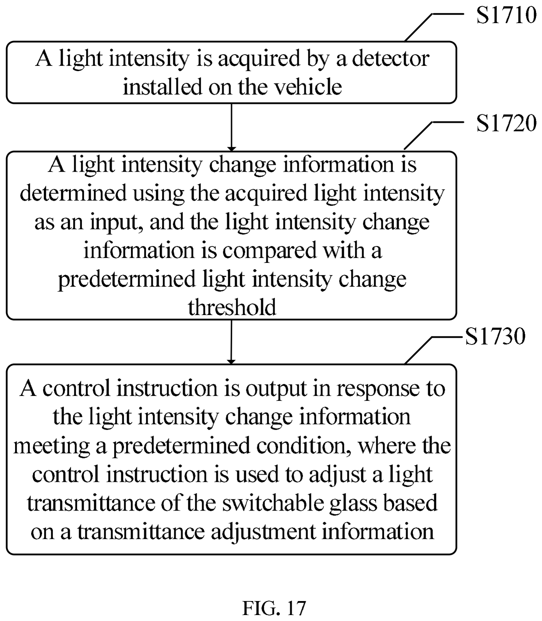

FIG. 17 shows a flowchart of a method of controlling a switchable glass system according to still other exemplary embodiments of the present disclosure. The control method includes steps S1710 to S1730.

In step S1710, a light intensity is acquired by a detector installed on the vehicle. For another example, in step S1710, a light intensity of a region where the switchable glass is located may be acquired by a detector installed on the vehicle, and a position information of the vehicle may be acquired by a position sensor.

In step S1720, a light intensity change information is determined using the acquired light intensity as an input, and the light intensity change information is compared with a predetermined light intensity change threshold. The light intensity change information includes at least one of a light intensity value change or a light intensity change rate. For another example, in step S1720, the acquired light intensity and position information may be used as the input and compared with the predetermined light intensity change threshold and a geographical location range, respectively.

In step S1730, a control instruction is output in response to the light intensity change information meeting a predetermined condition. The control instruction is used to adjust a light transmittance of the switchable glass based on a transmittance adjustment information. The transmittance adjustment information includes adjusting at least one of a magnitude of the light transmittance of the switchable glass or a change rate of the light transmittance of the switchable glass. For another example, in step S1730, the control instruction may be output in response to the light intensity change information meeting the predetermined condition and/or the position information meeting the predetermined condition.

It should be noted that in embodiments of the present disclosure, some steps in the above method may be performed separately or in combination, and may be performed in parallel or sequentially, which are not limited to the specific operation sequence shown in the figures.

Some embodiments according to the general inventive concept of the present disclosure have been shown and described. However, those skilled in the art may understand that changes may be made to these embodiments without departing from the principles and spirit of the general inventive concept of the present disclosure, and the scope of the present disclosure is determined by the claims and their equivalents.

## Claims

1. A method of controlling a switchable glass system for a vehicle, the switchable glass system comprising a switchable glass installed on the vehicle,
the method comprising:
acquiring a light intensity change information, the light intensity change information comprising at least one of a light intensity value change or a light intensity change rate; and
adjusting a light transmittance of the switchable glass based on a transmittance adjustment information in response to the light intensity change information meeting a predetermined condition,
wherein the transmittance adjustment information comprises adjusting at least one of a magnitude of the light transmittance of the switchable glass or a change rate of the light transmittance of the switchable glass.

2. The method according to claim 1, further comprising:
determining the transmittance adjustment information according to a predetermined first mapping relationship between the light intensity change information and a light transmittance adjustment information, in response to the light intensity change information meeting the predetermined condition, wherein the determined transmittance adjustment information corresponds to the light intensity change information meeting the predetermined condition in the first mapping relationship.

3. The method according to claim 1 or 2, wherein the adjusting a light transmittance of the switchable glass comprises:
adjusting the light transmittance of the switchable glass by regulating an electrical signal applied to the switchable glass, wherein the electrical signal is regulated based on an electrical signal regulation information.

4. The method according to claim 3, wherein the electrical signal regulation information comprises regulating at least one of an amplitude of the electrical signal applied to the switchable glass or a switching rate of the electrical signal applied to the switchable glass.

5. The method according to claim 3 or 4, further comprising:
determining the electrical signal regulation information according to a predetermined second mapping relationship between the light intensity change information and the electrical signal regulation information, in response to the light intensity change information meeting the predetermined condition, wherein the determined electrical signal regulation information corresponds to the light intensity change information meeting the predetermined condition in the second mapping relationship.

6. The method according to any one of claims 1 to 5, wherein the light intensity change information meeting the predetermined condition comprises: an absolute value of a difference between an actual light intensity value detected and a predetermined light intensity value being greater than a first predetermined light intensity difference threshold.

7. The method according to any one of claims 1 to 5, wherein the light intensity change information meeting the predetermined condition comprises: an absolute value of a difference between actual light intensity values detected at two time instants being greater than a second predetermined light intensity difference threshold.

8. The method according to any one of claims 1 to 7, wherein the light intensity change information meeting the predetermined condition comprises: the light intensity change rate being greater than a predetermined light intensity change rate threshold.

9. The method according to any one of claims 1 to 8, wherein the adjusting a light transmittance of the switchable glass based on a transmittance adjustment information in response to the light intensity change information meeting a predetermined condition specifically comprises:
reducing the light transmittance of the switchable glass in response to a light intensity rise information meeting the predetermined condition.

10. The method according to any one of claims 1 to 9, wherein the adjusting a light transmittance of the switchable glass based on a transmittance adjustment information in response to the light intensity change information meeting a predetermined condition specifically comprises:
increasing the light transmittance of the switchable glass in response to a light intensity drop information meeting the predetermined condition.

11. The method according to any one of claims 1 to 8, wherein the adjusting a light transmittance of the switchable glass based on a transmittance adjustment information in response to the light intensity change information meeting a predetermined condition specifically comprises:
increasing the light transmittance of the switchable glass in response to a light intensity rise information meeting a predetermined condition.

12. The method according to any one of claims 3 to 11, wherein the light intensity change rate is greater than a predetermined light intensity change rate threshold in a continuous time period, the continuous time period comprises a start time instant and an end time instant, a maximum light intensity change rate time instant is between the start time instant and the end time instant, and a light intensity change rate at the maximum light intensity change rate time instant is a maximum light intensity change rate in the continuous time period; and
wherein a start regulation time instant of regulating the electrical signal applied to the switchable glass is one of the start time instant, the maximum light intensity change rate time instant, or the end time instant.

13. The method according to any one of claims 3 to 12, wherein the regulating an electrical signal applied to the switchable glass comprises: regulating the electrical signal applied to the switchable glass at a fixed switching rate.

14. The method according to any one of claims 3 to 12, wherein the regulating an electrical signal applied to the switchable glass comprises:
regulating the electrical signal applied to the switchable glass at a first fixed switching rate in response to a light intensity rise information meeting the predetermined condition; and
regulating the electrical signal applied to the switchable glass at a second fixed switching rate in response to a light intensity drop information meeting the predetermined condition.

15. The method according to claim 14, wherein the second fixed switching rate is less than the first fixed switching rate.

16. The method according to any one of claims 3 to 12, wherein the regulating an electrical signal applied to the switchable glass comprises: regulating the electrical signal applied to the switchable glass at a variable switching rate.

17. The method according to claim 16, wherein acquiring the light intensity change information comprises acquiring the light intensity change rate;
wherein the determining the electrical signal regulation information according to a predetermined second mapping relationship between the light intensity change information and the electrical signal regulation information comprises determining a switching rate of the electrical signal according to the predetermined second mapping relationship between the light intensity change information and the electrical signal regulation information, and the determined switching rate of the electrical signal corresponds to the light intensity change rate in the second mapping relationship; and
wherein the regulating an electrical signal applied to the switchable glass comprises regulating the electrical signal applied to the switchable glass based on the determined switching rate of the electrical signal.

18. The method according to any one of claims 1 to 17, wherein acquiring the light intensity change information comprises: acquiring the light intensity change information in a process of the vehicle passing through an entrance of an enclosed space.

19. The method according to claim 18, wherein the light intensity change information meeting the predetermined condition comprises:
an actual light intensity value detected outside the enclosed space being greater than a first predetermined light intensity threshold; and/or
an actual light intensity value detected inside the enclosed space being less than a second predetermined light intensity threshold.

20. The method according to any one of claims 1 to 19, wherein acquiring the light intensity change information comprises: acquiring the light intensity change information in a process of the vehicle passing through an exit of the enclosed space.

21. The method according to claim 20, wherein the light intensity change information meeting the predetermined condition comprises:
an actual light intensity value detected inside the enclosed space being less than a third predetermined light intensity threshold; and/or
an actual light intensity value detected outside the enclosed space being greater than a fourth predetermined light intensity threshold.

22. The method according to any one of claims 1 to 21, further comprising:
acquiring a position information of the vehicle; and
pre-regulating an electrical signal applied to the switchable glass according to the acquired position information, so as to pre-adjust the light transmittance of the switchable glass.

23. The method according to claim 22, wherein the pre-regulating an electrical signal applied to the switchable glass according to the acquired position information specifically comprises:
pre-regulating the electrical signal applied to the switchable glass at a fixed switching rate in a process of the vehicle passing through an entrance or an exit of an enclosed space.

24. The method according to claim 22, wherein the pre-regulating an electrical signal applied to the switchable glass according to the acquired position information specifically comprises:
pre-regulating the electrical signal applied to the switchable glass at a variable switching rate in a process of the vehicle passing through an entrance or an exit of an enclosed space, wherein the variable switching rate is determined based on a speed of the vehicle.

25. The method according to claim 22, wherein regulating the electrical signal applied to the switchable glass comprises: regulating a switching rate of the electrical signal applied to the switchable glass according to the acquired position information.

26. The method according to claim 25, wherein the regulating a switching rate of the electrical signal applied to the switchable glass according to the acquired position information specifically comprises:
regulating the switching rate of the electrical signal to a first switching rate in a process of the vehicle passing through an entrance of an enclosed space, wherein the first switching rate is greater than a predetermined switching rate.

27. The method according to claim 25, wherein the regulating a switching rate of the electrical signal applied to the switchable glass according to the acquired position information specifically comprises:
regulating the switching rate of the electrical signal to a second switching rate in a process of the vehicle passing through an exit of an enclosed space, wherein the second switching rate is less than a predetermined switching rate.

28. The method according to claim 25, wherein the regulating a switching rate of the electrical signal applied to the switchable glass according to the acquired position information specifically comprises:
regulating the switching rate of the electrical signal to a third switching rate in a process of the vehicle being located in a first environment and a user of the vehicle leaving the vehicle, wherein the third switching rate is less than a predetermined switching rate, and the first environment is an environment familiar to the user of the vehicle; and/or
regulating the switching rate of the electrical signal to a fourth switching rate in a process of the vehicle being located in a second environment and a user of the vehicle leaving the vehicle, wherein the fourth switching rate is greater than a predetermined switching rate, and the second environment is an environment unfamiliar to the user of the vehicle.

29. The method according to any one of claims 3 to 28, wherein regulating the electrical signal applied to the switchable glass comprises: regulating the switching rate of the electrical signal applied to the switchable glass according to a speed of the vehicle in a travelling process of the vehicle, wherein the switching rate of the electrical signal is inversely proportional to the speed of the vehicle.

30. The method according to any one of claims 3 to 29, wherein regulating the electrical signal applied to the switchable glass comprises: regulating, for different regions of a same switchable glass, switching rates of electrical signals respectively applied to different regions of the same switchable glass by region.

31. The method according to claim 30, wherein the switchable glass comprises a side windshield glass on a driver side of the vehicle, and the regulating, for different regions of a same switchable glass, switching rates of electrical signals respectively applied to different regions of the same switchable glass by region specifically comprises:
regulating, for the side windshield glass, the switching rates of the electrical signals respectively applied to different regions of the side windshield glass by region, so that the switching rate for a partial region on a front side of the side windshield glass is less than the switching rate for a partial region on a rear side of the side windshield glass.

32. The method according to claim 30, wherein the switchable glass comprises a sunroof glass on a top side of the vehicle, and the regulating, for different regions of a same switchable glass, switching rates of electrical signals respectively applied to different regions of the same switchable glass by region specifically comprises:
regulating, for the sunroof glass, the switching rates of the electrical signals respectively applied to different regions of the sunroof glass by region, so that the switching rate for a partial region of the sunroof glass is different from the switching rate for another partial region of the sunroof glass.

33. The method according to any one of claims 3 to 32, wherein the switchable glass comprises a front windshield glass, a rear windshield glass, the sunroof glass, a sun visor and all side windshield glasses of the vehicle, and the adjusting the light transmittance of the switchable glass by regulating an electrical signal applied to the switchable glass specifically comprises:
regulating the electrical signal applied to at least one selected from a group consisiting of the front windshield glass, the rear windshield glass, the sunroof glass, the sun visor and all the side windshield glasses of the vehicle, so as to adjust the light transmittance of the at least one selected from the group consisiting of the front windshield glass, the rear windshield glass, the sunroof glass, the sun visor and all the side windshield glasses of the vehicle.

34. A method of controlling a switchable glass system for a vehicle, the switchable glass system comprising a switchable glass installed on the vehicle,
the method comprising:
acquiring at least one of a light intensity change information or a vehicle position change information, wherein the light intensity change information comprises at least one of a light intensity value change or a light intensity change rate;
performing a first adjustment on a light transmittance of the switchable glass in response to the light intensity change information meeting a first predetermined condition and/or the vehicle position change information meeting a first position condition, wherein the first adjustment comprises adjusting the light transmittance of the switchable glass based on a first transmittance adjustment information; and
performing a second adjustment on the light transmittance information of the switchable glass in response to the light intensity change information meeting a second predetermined condition, after performing the first adjustment on the light transmittance information of the switchable glass, wherein the second adjustment comprises adjusting the light transmittance of the switchable glass based on a second transmittance adjustment information,
wherein each of the first transmittance adjustment information and the second transmittance adjustment information comprises adjusting at least one of a magnitude of the light transmittance of the switchable glass or a change rate of the light transmittance of the switchable glass.

35. The method according to claim 34, further comprising: after performing the second adjustment on the light transmittance information of the switchable glass,
performing a third adjustment on the light transmittance information of the switchable glass in response to the light intensity change information meeting a third predetermined condition and/or the vehicle position change information meeting a second position condition, wherein the third adjustment comprises adjusting the light transmittance of the switchable glass based on a third transmittance adjustment information,
wherein the third transmittance adjustment information comprises adjusting at least one of the magnitude of the light transmittance of the switchable glass or the change rate of the light transmittance of the switchable glass.

36. The method according to claim 35, further comprising: after performing the third adjustment on the light transmittance information of the switchable glass,
performing a fourth adjustment on the light transmittance information of the switchable glass in response to the light intensity change information meeting a fourth predetermined condition, wherein the fourth adjustment comprises adjusting the light transmittance of the switchable glass based on a fourth transmittance adjustment information,
wherein the fourth transmittance adjustment information comprises adjusting at least one of the magnitude of the light transmittance of the switchable glass or the change rate of the light transmittance of the switchable glass.

37. The method according to any one of claims 34 to 36, further comprising:
determining the first transmittance adjustment information according to a predetermined first mapping relationship between the light intensity change information and a light transmittance adjustment information in response to the light intensity change information meeting the first predetermined condition, wherein the first transmittance adjustment information corresponds to the light intensity change information meeting the first predetermined condition in the first mapping relationship; and/or
determining the second transmittance adjustment information according to the predetermined first mapping relationship between the light intensity change information and the light transmittance adjustment information in response to the light intensity change information meeting the second predetermined condition, wherein the second transmittance adjustment information corresponds to the light intensity change information meeting the second predetermined condition in the first mapping relationship; and/or
determining the third transmittance adjustment information according to the predetermined first mapping relationship between the light intensity change information and the light transmittance adjustment information in response to the light intensity change information meeting the third predetermined condition, wherein the third transmittance adjustment information corresponds to the light intensity change information meeting the third predetermined condition in the first mapping relationship; and/or
determining the fourth transmittance adjustment information according to the predetermined first mapping relationship between the light intensity change information and the light transmittance adjustment information in response to the light intensity change information meeting the fourth predetermined condition, wherein the fourth transmittance adjustment information corresponds to the light intensity change information meeting the fourth predetermined condition in the first mapping relationship.

38. The method according to any one of claims 34 to 37, wherein the performing a first adjustment on a light transmittance of the switchable glass comprises: performing the first adjustment on the light transmittance of the switchable glass by performing a first regulation on an electrical signal applied to the switchable glass, wherein the first regulation comprises regulating the electrical signal based on a first electrical signal regulation information; and/or
the performing a second adjustment on the light transmittance of the switchable glass comprises: performing the second adjustment on the light transmittance of the switchable glass by performing a second regulation on an electrical signal applied to the switchable glass, wherein the second regulation comprises regulating the electrical signal based on a second electrical signal regulation information; and/or
the performing a third adjustment on the light transmittance of the switchable glass comprises: performing the third adjustment on the light transmittance of the switchable glass by performing a third regulation on an electrical signal applied to the switchable glass, wherein the third regulation comprises regulating the electrical signal based on a third electrical signal regulation information; and/or
the performing a fourth adjustment on the light transmittance of the switchable glass comprises: performing the fourth adjustment on the light transmittance of the switchable glass by performing a fourth regulation on an electrical signal applied to the switchable glass, wherein the fourth regulation comprises regulating the electrical signal based on a fourth electrical signal regulation information.

39. The method according to claim 38, wherein each of the first electrical signal regulation information, the second electrical signal regulation information, the third electrical signal regulation information and the fourth electrical signal regulation information comprises regulating at least one of an amplitude of the electrical signal applied to the switchable glass or a switching rate of the electrical signal applied to the switchable glass.

40. The method according to claim 38 or 39, further comprising:
determining the first electrical signal regulation information according to a predetermined second mapping relationship between the light intensity change information and an electrical signal regulation information in response to the light intensity change information meeting the first predetermined condition, wherein the first electrical signal regulation information corresponds to the light intensity change information meeting the first predetermined condition in the second mapping relationship; and/or
determining the second electrical signal regulation information according to the predetermined second mapping relationship between the light intensity change information and an electrical signal regulation information in response to the light intensity change information meeting the second predetermined condition, wherein the second electrical signal regulation information corresponds to the light intensity change information meeting the second predetermined condition in the second mapping relationship; and/or
determining the third electrical signal regulation information according to the predetermined second mapping relationship between the light intensity change information and an electrical signal regulation information in response to the light intensity change information meeting the third predetermined condition, wherein the third electrical signal regulation information corresponds to the light intensity change information meeting the third predetermined condition in the second mapping relationship; and/or
determining the fourth electrical signal regulation information according to the predetermined second mapping relationship between the light intensity change information and an electrical signal regulation information in response to the light intensity change information meeting the fourth predetermined condition, wherein the fourth electrical signal regulation information corresponds to the light intensity change information meeting the fourth predetermined condition in the second mapping relationship.

41. The method according to any one of claims 34 to 40, further comprising:
determining the first transmittance adjustment information according to a predetermined third mapping relationship between the vehicle position change information and the light transmittance adjustment information in response to the vehicle position change information meeting the first position condition, wherein the first transmittance adjustment information corresponds to the vehicle position change information meeting the first position condition in the third mapping relationship; and/or
determining the third transmittance adjustment information according to the predetermined third mapping relationship between the vehicle position change information and the light transmittance adjustment information in response to the vehicle position change information meeting the second position condition, wherein the third transmittance adjustment information corresponds to the vehicle position change information meeting the second position condition in the third mapping relationship.

42. The method according to any one of claims 34 to 41, wherein the vehicle position change information meeting the first position condition comprises: the vehicle being located outside an enclosed space and a distance from the vehicle to an entrance of the enclosed space being less than or equal to a first predetermined distance; and/or
wherein the vehicle position change information meeting the second position condition comprises: the vehicle being located inside an enclosed space and a distance from the vehicle to an exit of the enclosed space being less than or equal to a second predetermined distance.

43. A method of controlling a switchable glass system for a vehicle, the switchable glass system comprising a switchable glass installed on the vehicle,
the method comprising:
acquiring a light intensity by a detector installed on the vehicle;
determining a light intensity change information by using the acquired light intensity as an input, and comparing the light intensity change information with a predetermined light intensity change threshold, wherein the light intensity change information comprises at least one of a light intensity value change or a light intensity change rate; and
outputting a control instruction in response to the light intensity change information meeting a predetermined condition, wherein the control instruction is used to adjust a light transmittance of the switchable glass based on a transmittance adjustment information,
wherein the transmittance adjustment information comprises adjusting at least one of a magnitude of the light transmittance of the switchable glass or a change rate of the light transmittance of the switchable glass.

44. The method according to claim 43, further comprising:
acquiring a position information of the vehicle, wherein the input further comprises the acquired position information.

45. A switchable glass system for a vehicle, comprising:
a switchable glass installed on the vehicle, wherein the switchable glass comprises: a first base substrate and a second base substrate opposite to each other; a first electrode on the first base substrate; a second electrode on the second base substrate; and a switchable assembly sandwiched between the first base substrate and the second base substrate; and
a controller electrically connected to the first electrode and the second electrode of the switchable glass, wherein the controller is configured to implement the method according to any one of claims 1 to 44.
